# EUROPÄISCHE PATENTSCHRIFT

(11) **EP 2 697 604 B1**
(45) Veröffentlichungstag und Bekanntmachung des Hinweises auf die Patenterteilung: **04.03.2015**
(21) Anmeldenummer: 12713744.6
(22) Anmeldetag: 13.04.2012
(51) Int. Cl.: G01B 21/04, B64C 39/02

(54) **VERMESSUNGSSYSTEM ZUR BESTIMMUNG VON 3D-KOORDINATEN EINER OBJEKTOBERFLÄCHE**
MEASURING SYSTEM FOR DETERMINING 3D COORDINATES OF AN OBJECT SURFACE
SYSTÈME DE MESURE PERMETTANT DE DÉTERMINER DES COORDONNÉES 3D D'UNE SURFACE D'OBJET

(30) Priorität: 14.04.2011 EP 11162508
(43) Veröffentlichungstag der Anmeldung: 19.02.2014
(73) Patentinhaber: Hexagon Technology Center GmbH, 9435 Heerbrugg (CH)
(72) Erfinder: METZLER, Bernhard, A-6850 Dornbirn (AT); SIERCKS, Knut, 9402 Mörschwil (CH)
(74) Vertreter: Gyaja, Christoph Benjamin
(86) Internationale Anmeldenummer: PCT/EP2012/056759
(87) Internationale Veröffentlichungsnummer: WO 2012/140190

(56) Entgegenhaltungen:
- EP-A1- 2 023 077
- EP-A2- 0 754 930
- WO-A1-2012/049438
- DE-A1- 10 048 097
- DE-A1- 10 246 781
- DE-A1- 19 633 686
- DE-A1- 19 742 335

## Beschreibung

Die Erfindung betrifft ein Vermessungssystem zur dreidimensionalen Vermessung eines Objekts, insbesondere eines industriellen Erzeugnisses, nach dem Oberbegriff des Anspruchs 1, ein Verfahren zum Bestimmen von 3D-Koordinaten nach Anspruch 7 und ein unbemanntes, steuerbares, auto-mobiles Fluggerät nach Anspruch 12 zur Verwendung in einem erfindungsgemässen System.

Systeme zur Vermessung von Oberflächen von Objekten werden beispielsweise in der Industrie begleitend im Produktionsprozess zur Überprüfung von Bauteil- bzw. Produktgeometrien eingesetzt. Auf diese Weise können Bemessungstoleranzen von Objekten überprüft und produktionsbedingte Fertigungsfehler schnell erkannt und Teile, deren Masse ausserhalb einer vordefinierten Norm liegen, aus dem Prozess genommen werden. Eine Verbesserung einer Produktionsquote mit einer gleichzeitigen Verringerung von Fehlproduktionen von Teilen kann die Folge des Einsatzes eines derartigen Vermessungssystems sein.

In einer industriellen Fertigung können z.B. Vermessungssystem mit taktilen Sensoren eingesetzt. Diese Systeme weisen zumeist eine bewegliche, führbare Messspitze auf, an deren Ende eine Rubinkugel befestigt ist, wobei bei einem Kontakt der Rubinkugel mit der Objektoberfläche ein Messpunkt erfasst und die Koordinaten des Punkts bestimmt werden können. Durch ein Abtasten definierter Objektpositionen oder durch ein Abfahren von Teilen der Oberfläche kann somit Form und Mass des Objekts erfasst, mit dafür vorab bestimmten Sollwerten abgeglichen und allfällige Abweichungen von den Sollwerten festgestellt werden.

Eine taktile Vermessung von Objekten kann bei sehr grossen Objekten, beispielsweise Flugzeugen, nachteilig sein, da ein solcher Vermessungsvorgang zum einen sehr zeitintensiv und zum anderen aufgrund der Objektgrösse nur erschwert durchführbar ist. Die steigenden Forderungen nach einer weitgehend vollständigen Qualitätskontrolle im laufenden Produktionsprozess sowie nach einer Digitalisierung der Raumform von Objekten, insbesondere von Prototypen, machen die Aufnahme von Oberflächentopografien - im Hinblick auf eine Bestimmung von Koordinaten einzelner Punkte der Oberfläche der zu vermessenden Gegenstände in kurzer Zeit-zu einer immer häufiger gestellten Messaufgabe.

Zur Verringerung der Messzeit kann dafür ein optischer Messsensor zur berührungslosen Vermessung eingesetzt werden. Ein derartiges optisches Oberflächenvermessungssystem kann im Allgemeinen über ein Bild-Sequenzen verwendendes Messsystem zur Bestimmung von 3D-Koordinaten oder einen optischen Scanner, z.B. einen Linienscanner, verfügen, mit dem zeilenweise die Oberfläche abgerastert wird, wobei das Messsystem oder der Scanner gleichzeitig über die Oberfläche geführt wird.

Ein aus dem Stand der Technik bekannter Scanner kann dabei in kurzer Zeit die Entfernungen zu einer Vielzahl von Punkten in Abhängigkeit des jeweiligen Scannwinkels erfassen. Daraus kann unter Berücksichtigung der relativen Bewegung des Scanners zur Oberfläche eine Punktwolke generiert werden, welche die Oberfläche des zu vermessenden Objekts repräsentiert. Mittels Bildverarbeitung kann ferner eine gemessene Oberfläche grafisch aufbereitet, auf einem Display dargestellt und eine Angabe von eventuell aufgetretenen Messabweichungen in die Grafik eingebunden werden.

Weiterhin weisen aus dem Stand der Technik bekannte, Bild-Sequenzen verwendende Messsysteme zur Bestimmung von 3D-Koordinaten von Messobjekten, die beispielsweise als portable, handhaltbare und/oder fest installierte Systeme ausgebildet sein können, dabei im Allgemeinen einen Musterprojektor zur Beleuchtung des Messobjekts mit einem Muster auf und werden daher teilweise auch als musterprojizierende 3D-Scanner oder Lichtstrukturen-3D-Scanner bezeichnet. Das auf die Oberfläche des Messobjekts projizierte Muster wird von einem Kamerasystem als weiterer Bestandteil des Messsystems aufgenommen.

Im Rahmen einer Messung beleuchtet also der Projektor das Messobjekt zeitlich sequentiell mit unterschiedlichen Mustern (z.B. parallele helle und dunkle Streifen unterschiedlicher Breite, insbesondere kann auch eine Drehung des Streifenmusters z.B. um 90° erfolgen). Die Kamera(s) registrieren das projizierte Streifenmuster unter einem bekannten Blickwinkel zur Projektion. Für jedes Projektionsmuster wird mit jeder Kamera ein Bild aufgenommen. Für jeden Bildpunkt aller Kameras entsteht so eine zeitliche Folge von unterschiedlichen Helligkeitswerten.

Projiziert werden können dabei ausser Streifen jedoch auch entsprechende andere Muster, wie beispielsweise Random Patterns, Pseudocodes, etc. Dafür geeignete Muster sind aus dem Stand der Technik dem Fachmann hinlänglich bekannt. Pseudocodes ermöglichen z.B. eine leichtere absolute Zuordnung von Objektpunkten, was bei der Projektion sehr feiner Streifen zunehmend schwieriger wird. Zu diesem Zweck kann also entweder in schneller Folge zunächst ein oder mehrere Pseudocodes und danach ein feines Streifenmuster oder auch in aufeinander folgenden Aufnahmen verschiedene, in der Abfolge feiner werdende Streifenmuster projiziert werden, bis die gewünschte Genauigkeit in der Auflösung von Messpunkten auf der Messobjekt-Oberfläche erreicht ist.

Die 3D-Koordinaten der Messobjekt-Oberfläche können dann aus der aufgenommenen Bild-Sequenz mittels Bildverarbeitung nach dem Fachmann auf diesem Gebiet bekannten Verfahren aus der Photogrammetrie und/oder Streifenprojektion berechnet werden. Beispielsweise sind derartige Messverfahren und Messsysteme beschrieben in der WO 2008/046663, der DE 101 27 304 A1, der DE 196 33 686 A1 oder der DE 10 2008 036 710 A1.

Ein Problem bei der Durchführung einer Vermessung mit einem Messsystems mit Kamera oder Scanner ergibt sich oftmals bei manueller, d.h. handgeführter, Messung. Da prinzipiell sehr hohe Rechenleistungen benötigt werden, um eine Punktwolke einer Oberfläche dreidimensional zu erfassen und zu verarbeiten, insbesondere dann wenn aufgrund einer Bewegung des Messsystems erfasste Bilder bzw. Scannzeilen zusammengefügt werden sollen, ist die Bewegungstoleranz in aller Regel hinsichtlich Geschwindigkeit und Vibration stark limitiert. Ein weitgehendes Ruhighalten des Messsystems bei der Messung ist damit zwingend erforderlich und bei nicht Einhalten Hauptursache von erzeugten Messfehlern.

Ein Ansatz derartige Messfehler bei der Erfassung der Oberfläche - auch bei einer Verwendung eines Roboterarms zur Führung des Messsensors - zu berücksichtigen und damit Vibrationen oder Geschwindigkeitsänderungen im Rahmen der Messung auszugleichen wird beispielsweise in der nach dem Prioritätsdatum der vorliegenden Anmeldung veröffentlichten europäischen Patentanmeldung EP 2 400 261 A1 beschrieben.

Beim Aufnehmen von Bild-Sequenzen können hierbei z.B. translatorische und/oder rotatorische Beschleunigungen des Messsensors oder des Messobjekts gemessen und die gemessenen Beschleunigungen beim Bestimmen der 3D-Koordinaten des Objekts berücksichtigt werden. Dabei kann dann das Bestimmen der 3D-Koordinaten von Messpunkten in Abhängigkeit von den gemessenen Beschleunigungen erfolgen. Somit können von einer unruhigen Führung des Messsystems verursachte Fehler rechnerisch berücksichtigt und in der Folge korrekte Positionsdaten ermittelt werden.

Ein alternativer Vorschlag eine berührungslose 3D-Oberflächenvermessung mittels einer Aufnahmeeinheit exakt und schnell durchführbar zu machen wird in der EP 2 023 077 unterbreitet. Eine an einen Messkopf gekoppelte Messvorrichtung kann zu einer mit dem Messkopf ausgeführten Messung Position und Ausrichtung des Kopfes ermitteln, wobei der Messkopf mittels eines Gelenkarms an eine Oberfläche herangeführt bzw. an dieser entlang geführt werden kann. Durch eine zweite Messung eines zumindest teilweise überlappenden Oberflächenabschnitts kann aus den so gewinnbaren Positionsinformationen in einem gemeinsamen Koordinatensystem ein Oberflächenabbild generiert werden.

Ein den oben angeführten Ausführungsformen gemeinsamer Nachteil ist, dass bei einem grossen zu vermessenden Objekt, aufgrund der eingeschränkten Reichweite eines Gelenkarms und der anatomisch begrenzten Reichweite bzw. Beweglichkeit einer das Vermessungssystem führenden Person, das Erreichen aller relevanten Messpositionen an dem Objekt nur erschwert bzw. teilweise nicht durchführbar ist. Des Weiteren kann eine Objektvermessung beispielsweise in einer toxischen Umgebung von einem Menschen zum einen nur in spezieller Schutzausrüstung und damit wiederum unter erschwerten Bedingungen oder zum anderen z.B. bei Überschreitung tolerierbarer Toxizitätswerte die Vermessung nicht mehr vorgenommen werden.

Daneben sind aus DE 102 46 781 A1, DE 197 42 335 A1 und der nach dem Prioritätsdatum der vorliegenden Anmeldung veröffentlichten WO 2012/049438 A1 Ansätze bekannt, Objektoberflächen mittels einer an einem unbemannten, steuerbaren, auto-mobilen Fluggerät angebrachten Abtastvorrichtung optisch zu vermessen. Dabei beschreibt DE 102 46 781 A1 die 3D-Vermessung großer Objekte z.B. mittels eines Interferometers zur Abstandsmessung sowie einer Referenzierungseinrichtung.

Es ist daher eine Aufgabe der vorliegenden Erfindung ein Vermessungssystem mit zugehörigen Einheiten sowie ein entsprechendes Verfahren bereitzustellen, mit dem eine Oberflächenvermessung präzise, schneller und mit einem hohen Grad an Automatisierung, insbesondere an zumindest teilweise schwer zugänglichen Objekten, durchführbar ist.

Eine spezielle Aufgabe der vorliegenden Erfindung ist es, eine Möglichkeit bereitzustellen, eine weitestgehend vollständige dreidimensionale Vermessung eines Objekts in einer für den Menschen schädlichen bzw. menschenfeindlichen Umgebung benutzerfreundlich, einfacher und schneller durchführbar zu machen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Gegenstand der Erfindung ist ein Vermessungssystem zur Bestimmung von 3D-Koordinaten, insbesondere von einer Vielzahl von 3D-Koordinaten, von Messpunkten einer Objektoberfläche, insbesondere eines industriellen Erzeugnisses, in einem äusseren Objektkoordinatensystem.

Dabei weist das Vermessungssystem eine auf dem Triangulationsprinzip basierende optische Abtastvorrichtung zur, insbesondere punktweisen, optischen Vermessung der Messpunkte der Objektoberfläche und zur Bestimmung von inneren Messpunktkoordinaten in einem inneren Abtastkoordinatensystem, eine Referenzierungsanordnung zur Erzeugung von Referenzierungsinformationen, insbesondere einer äusseren Vermessposition und Vermessausrichtung der Abtastvorrichtung, zur Referenzierung der inneren Messpunktkoordinaten in dem äusseren Objektkoordinatensystem und einer Auswerteeinheit zur Bestimmung der 3D-Koordinaten der Messpunkte im äusseren Objektkoordinatensystem in Abhängigkeit der inneren Messpunktkoordinaten und der Referenzierungsinformationen auf, sodass die inneren Messpunktkoordinaten als 3D-Koordinaten in dem äusseren Objektkoordinatensystem, insbesondere als Punktwolke, vorliegen. Weiters weist das Vermessungssystem ein unbemanntes, steuerbares, auto-mobiles Fluggerät auf und die Abtastvorrichtung wird von dem Fluggerät getragen, insbesondere wobei das Fluggerät derart ausgebildet ist, dass das Fluggerät schwebend ausrichtbar und bewegbar ist. Ferner ist eine derart konfigurierte Steuereinheit vorgesehen, dass das Fluggerät unter Berücksichtigung von mittels der Abtastvorrichtung jeweils aktuell bestimmten inneren Messpunktkoordinaten und/oder unter Berücksichtigung von einer durch ein digitales Modell vordefinierten Objektoberfläche entlang einer durch das digitale Modell definierten Flugroute automatisch gesteuert relativ zur Objektoberfläche unter Einhaltung eines vordefinierten Messabstandsbereichs, insbesondere Messabstands, bewegt wird.

Erfindungsgemäss kann die Steuereinheit derart konfiguriert sein, dass das Fluggerät in Abhängigkeit einer mittels der Referenzierungsanordnung bestimmbaren, insbesondere fortlaufend bestimmbaren, Vermessposition und Vermessausrichtung der Abtastvorrichtung und/oder eines mittels der Abtastvorrichtung bestimmbaren Vermessabstands zur Objektoberfläche automatisch gesteuert relativ zur Objektoberfläche bewegbar und ausrichtbar ist.

Ferner kann die Abtastvorrichtung eines erfindungsgemässen Vermessungssystems eine optische Scannvorrichtung, wobei bei der Bewegung des Fluggeräts Scannstreifen erzeugbar sind, und/oder ein Bild-Sequenzen verwendendes Messsystem zur Bestimmung der Messpunktkoordinaten aufweisen, insbesondere wobei die Abtastvorrichtung einen Linienscanner, einen Streifenprojektionsscanner und/oder eine Kamera aufweisen kann.

In diesem Zusammenhang ist ferner die Anordnung eines Teleskops am Fluggerät denkbar, wobei das Teleskop um eine horizontale und eine vertikale Achse gedreht und die jeweiligen Winkel der Teleskopausrichtung erfasst werden können. Zudem können eine Entfernungsmesseinheit und eine Kamera in das Teleskop integriert sein, damit das Teleskop auf Basis eines erfassten Bildes ausgerichtet und die Entfernung bzw. Koordinaten zu einem anzumessenden Punkt bestimmt werden können. In dieser Konfiguration kann das Fluggerät somit eine bewegliche, fliegende Totalstation repräsentieren.

Ein derartiges erfindungsgemässes Vermessungssystem kann eine Vermessung von Objekten so ermöglichen, dass die Positionierung der messenden Messeinheit, d.h. des Fluggeräts, völlig automatisch abläuft und damit kein insbesondere iteratives Annähern durch einen Benutzers an einen vorgegebenen Zielpunkt oder eine Oberfläche erforderlich ist. Hierzu kann das Fluggerät intern gesteuert oder ferngesteuert z.B. mittels Funksignalen oder mittels Signalen, die kabelgebunden, via Infrarot oder via Bluetooth an das Fluggerät übermittelt werden, zu einer definierten Position gesteuert werden. Zudem kann eine Energieversorgung des Fluggeräts über ein Kabel, das das Fluggerät mit einer Fernbedienung und/oder mit der Referenzierungsanordnung verbindet, erfolgen. Als Fluggerät kann beispielsweise eine flugfähige Drohne verwendet werden, welche durch eine gezielte Ansteuerung von motorgetriebenen Rotoren positionierbar ist, wobei das Fluggerät unbemannt und, insbesondere ferngesteuert, mittels der vorgesehenen Motorisierung bewegbar ist.

Zur Steuerung des Fluggeräts bzw. zur Erzeugung von Steuersignalen zur Steuerung kann mit dem Vermessungssystem eine Position des Fluggeräts bestimmt werden. Hierfür ist eine Referenzierungsanordnung vorgesehen. Diese Anordnung kann eine Totalstation, einen Theodoliten, ein Tachymeter oder z.B. ein GNSS-System bzw. Positionsinformation aussendende Pseudo-Satelliten, so genannte Pseudoliten, aufweisen, wobei jeweils ein mit der entsprechenden Anordnung korrespondierendes Modul fluggeräteseitig angeordnet ist. Durch eine so erreichbare Interaktion zwischen einem zur Positionsbestimmung vorgesehenen Gerät und einer darauf abgestimmten Komponente kann eine Position des Fluggeräts exakt bestimmt und darüber hinaus die Position des Fluggeräts fortlaufend bzw. kontinuierlich verfolgt werden.

Zusätzlich zur Positionsbestimmung kann eine Bestimmung der Ausrichtung des Fluggeräts durchführbar sein. Mittels an der Flugeinheit vorgesehenen Sensoren, wie beispielsweise Beschleunigungssensoren, Drehratensensoren, Magnetkompass, insbesondere einer IMU (Inertial Measurement Unit), kann die Ausrichtung der Einheit in bis zu drei Achsen bestimmbar sein. Somit können Gier-, Nick- und Rollwinkel bestimmt werden und bei von der Einheit auszuführenden Vermessungsaufgaben berücksichtigt werden. Alternativ oder auch zusätzlich zu der Bestimmung mittels interner Sensoren kann die Ausrichtungsbestimmung extern erfolgen. Dazu können Markierungen, insbesondere in Form von Leuchtdioden, an dem Fluggerät in einer definierten Verteilung bzw. mit einer definierten relativen Lage zueinander angebracht sein und die Markierung von einer Erfassungseinheit, insbesondere einer Kamera, erfasst werden. Mittels der Lage der Dioden auf einem aufgenommen Bild kann so auf die Ausrichtung des Fluggeräts geschlossen werden.

In Kenntnis einer Oberflächentopographie des Objekts kann auf Basis einer aktuell bestimmten Fluggeräteposition eine Relativposition des Fluggeräts, beispielsweise zu einer Oberflächennormalen, bestimmt werden und/oder abhängig von dem jeweiligen Positionierungsverhältnis das Fluggerät gesteuert werden. Aus diesen Informationen kann sich weiters eine Sollposition für das Fluggerät ableiten lassen und diese Sollposition als zu erreichende Zielposition für das Fluggerät definiert werden. Die Steuerung des Fluggeräts kann somit derart erfolgen, dass dieses zu der Sollposition gesteuert und dort positioniert wird. Eine Positionierung des Fluggeräts kann so zumindest vorübergehend weitestgehend positionsfest erfolgen, d.h. das Fluggerät kann unabhängig von äusseren Einflüssen über einen vorübergehenden Zeitraum hinweg eine ortsfeste Position schwankungsfrei halten. Dies kann insbesondere durch eine abgestimmte Steuerung des Fluggeräts erreicht werden. Ferner kann durch eine Bestimmung eines Bewegungspfades bzw. einer Flugroute für das Fluggerät, z.B. aus einer Vielzahl von Sollpositionen oder einem Oberflächensollverlauf einer Objektoberfläche, das Fluggerät entlang der Route bewegt werden, insbesondere wobei die Bewegung gleitend, d.h. ohne Schwankungen der Eigengeschwindigkeit also weitestgehend ohne Geschwindigkeitsänderung, erfolgt.

Eine Feststellung der Position des Fluggeräts oder einer Abweichung aus einer vorgegebenen Position kann fortlaufend durch die mit dem Fluggerät in Kontakt stehende Positionsbestimmungsanordnung erfolgen. Dafür kann eine der Positionsbestimmungsanordnung zugeordnete Sendeeinheit Positionierungssignale bereitstellen, die von einem Empfänger an der Zieleinheit empfangen werden können. Weist diese Anordnung z.B. einen GNSS-Sender auf bzw. wird ein GNSS-System dafür genutzt die Position des Fluggeräts genau zu bestimmen, so kann das Fluggerät einen GNSS-Empfänger aufweisen, mittels welchem eine Positionsinformation empfangen und daraus eine Position bestimmt werden kann. Ein hierfür gebräuchliches GNSS-System kann beispielsweise durch GPS oder GLONASS repräsentiert sein. Entsprechend kann an dem Fluggerät eine GNSS-Antenne angeordnet sein, um die dem jeweiligen System zugeordneten Signale empfangen zu können. Zusätzlich dazu kann eine GNSS-Referenzstation vorgesehen sein, welche ebenfalls zum Empfang von GNSS-Signalen ausgebildet ist und zudem Referenzdaten bzw. Korrekturdaten beispielsweise für eines der bekannten DGPS- oder RTK- oder VRS-Verfahren zur Genauigkeitssteigerung für eine Positionsbestimmung zur Verfügung stellt. Eine für ein derartiges Referenzsystem angepasstes Fluggerät kann somit zusätzlich zum Empfang von Korrektursignalen ausgebildet sein und eine geodätische Positionsbestimmung unter Berücksichtigung dieser Signale durchführen.

Soll jedoch eine Positionsbestimmung in einem geschlossenen Raum, beispielsweise in einer Fertigungshalle, erfolgen, so kann dort oftmals kein GNSS-Signal von dem Fluggerät empfangen werden. In diesem Fall kann eine Positionierung mittels Pseudo-Satelliten, so genannten Pseudoliten, in der Halle vorgenommen werden. Die Pseudoliten können an jeweils bekannten Positionen in Bezug zu einem äusseren Koordinatensystem (Objektkoordinatensystem) platziert werden und können von dort Positionsinformationen, z.B. in einem einem GNSS-Signal ähnlichen Signalformat, aussenden, mittels welchem wiederum eine Positionsbestimmung auf Seiten des Fluggeräts durchgeführt werden kann. Die Signale können dabei eine Position eines fiktiven Satelliten imitieren und somit zwar keine globale Positionsbestimmung bereitstellen, jedoch eine Bestimmung einer relativen Position innerhalb eines z.B. den Fertigungsraum repräsentierenden Koordinatensystems oder eines Objektkoordinatensystems erlauben. Sind ferner die Positionen der Pseudoliten relativ zum globalen Koordinatensystem bekannt, so kann auch eine absolute, globale Positionsbestimmung des Fluggeräts mittelbar durchführbar sein. Für eine derartige exakte Positionsbestimmung können seitens des Fluggeräts Signale von vier Pseudoliten empfangen werden, insbesondere wobei bei einer gemeinsamen Zeitbasis der Signale der Empfang von drei Signalen eine Positionsbestimmung genau durchführbar macht.

Insbesondere kann die Istposition des Fluggeräts festgestellt werden, indem ein an dem Fluggerät angeordnetes Modul z.B. ein Reflektor von einem Vermessungsgerät, beispielsweise von einer Totalstation oder einem Lasertracker, anzielbar ist. Dabei kann die Position des Vermessungsgeräts z.B. dadurch bereits bekannt sein, dass ein Einmessvorgang vermessungsgeräteseitig durchgeführt wurde und das Gerät somit durch Anmessung bekannter Punkte eine Eigenpositionsbestimmung durchführen konnte. Wird nun von dieser Vermessungsstation ein Reflektor an dem Fluggerät angezielt, kann durch Bestimmung der Ausrichtung eines emittierten Messstrahls die Richtung zum Fluggerät bestimmt und anhand einer mittels des Messstrahls durchgeführten Entfernungsmessung eine Distanz zu dem Fluggerät festgestellt werden. Aus diesen Grössen kann die relative Position des Fluggeräts zum Vermessungsgerät eindeutig und exakt bestimmt und mit Kenntnis der Position des Vermessungsgeräts eine absolute, insbesondere geodätisch genaue, Positionierung des Fluggeräts abgeleitet werden. Auf Basis der so, insbesondere fortlaufend, bestimmten Position des Fluggeräts (Istposition) kann eine Steuerung des Fluggeräts durchgeführt werden. Dafür können aus den Positionsinformationen Steuerungsdaten gewonnen und mittels dieser das Fluggerät zu einer definierten Sollposition geflogen werden.

Die Sollposition bzw. der Bewegungspfad bzw. die Flugroute für das Fluggerät kann insbesondere aus den Koordinaten oder Positionsangaben einer Objektoberfläche bestimmt werden. Repräsentiert diese beispielsweise eine Tragfläche eines Flugzeugs kann eine Route parallel zum Oberflächenverlauf der Tragfläche als Bewegungspfad definiert werden, welcher durch das als Messeinheit ausgestaltete Fluggerät abgeflogen werden kann. Zur Erleichterung einer Einhaltung einer genauen Bewegung des Fluggeräts kann hier ein Toleranzbereich um die Route definiert werden, wobei die Route als erreicht gilt, sobald das Fluggerät bzw. die die Position des Fluggeräts angebende Komponente in dem Toleranzbereich liegt. Weiters kann zum schwebenden Abfliegen ein Pfad definiert werden, der sich beispielsweise zwischen einem und einhundert Zentimetern, insbesondere zwischen fünf und 20 Zentimetern, beabstandet parallel zur Tragflächenoberfläche bzw. zu einer Tangente oder Tangentialfläche an die Oberfläche oder in einem bestimmten Winkel dazu, insbesondere innerhalb eines definierten Winkelbereichs, befindet. Hier kann ebenfalls ein Soll- bzw. Toleranzbereich, welcher eine definierte Positionierungstoleranz aufweist, um den Bewegungspfad bzw. die Flugroute aufgespannt werden, wobei die Sollposition bzw. die Flugroute als erreicht gilt wenn das Fluggerät bzw. wiederum die Komponente des Fluggeräts, die seine aktuelle Position angibt, sich in dem Sollbereich befindet. Insbesondere da durch äussere Einflüsse auf das Fluggerät, beispielsweise durch Änderungen in der Luftströmung, Temperaturänderung und/oder veränderliche Druckverhältnisse, dieses oftmals nicht unbegrenzt lange an einer fixen Position oder auf der definierten Flugroute schwebend gehalten werden kann, kann eine Definition eines entsprechenden Sollbereichs zur Positionierung und Bewegung vorteilhaft sein. Jedoch kann das Fluggerät durch eine ausgleichende Gegensteuerung gegen eine von aussen einwirkende Auslenkkraft eine innerhalb eines vorher definierten Sollbereichs veränderliche Position bewahren.

In die Festlegung einer bestimmten Flugroute für das Fluggerät kann zusätzlich eine jeweils erreichbare Ausrichtung des Fluggeräts einbezogen werden bzw. kann die Route derart gewählt werden, dass eine Ausrichtung des Fluggeräts in eine definierte Richtung an jeder Position der Route erfolgen kann. Dadurch kann zusätzlich zu einer bestimmten Positionierung oder Bewegung des Fluggeräts dessen Ausrichtung definiert sein und damit für mit dem Fluggerät durchzuführende Messungen eine absolute Vermessrichtung und - je nach Anforderung - eine zugehörige Vermessentfernung angegeben werden.

Das Fluggerät kann für solche Messvorgänge beispielsweise einen Scanner, z.B. einen Linienscanner, oder zum Zweck der Bestimmung von 3D-Koordinaten von Messobjekten ein alternatives Bild-Sequenzen verwendende Messsystem tragen. Mittels einer derartigen Vorrichtung kann eine Oberflächenstruktur punktweise, d.h. in einer bestimmten Auflösung, bei einem zeilenweise ablaufenden Scannvorgang mit einem Triangulationsscanner beispielsweise zwischen einem und 50 Punkten pro Millimeter, insbesondere auch ein oder mehrere Punkte zeitlich beabstandet wiederholt, erfasst werden. Ferner kann mittels Erfassen eine zumindest teilweise übereinstimmenden Objektoberflächenbereichs aus zwei unterschiedlichen Perspektiven, insbesondere wobei zusätzliche Muster auf den Teilbereich projiziert werden, ein dreidimensionale Oberflächenstruktur abgeleitet werden. Hierfür kann ein Messsystem beispielsweise eine Diode zur Projektion des Musters und zwei zueinander definiert angeordnete Kameras aufweisen.

Die somit erfasste punktaufgelöste 3D-Information der Oberfläche wird in aus dem Stand der Technik bekannten Verfahren üblicherweise repräsentiert durch eine Punktwolke. Die Punktkoordinaten dieser Wolke werden dabei in Bezug auf ein dem Messsystem zugewiesenen Koordinatensystem bestimmt. Weiters können durch die zuvor beschrieben Möglichkeiten der Positions- und Ausrichtungsbestimmung des Fluggeräts, wobei drei Rotations- und drei Translationsfreiheitsgrade des Fluggeräts bestimmbar sind, die Punktkoordinaten in ein übergeordnetes Koordinatensystem (Objektkoordinatensystem) übertragen und somit eine das Objekt bzw. die Objektoberfläche oder Teile davon repräsentierende Punktwolke generiert werden.

Eine Steuerung des Fluggeräts kann darüber hinaus auf Grundlage bekannter Objektdaten und durch Entfernungsmessungen zum Objekt (mittels des Scanners) sowie durch eine Bestimmung der Ausrichtung des Fluggeräts erfolgen. So kann eine Flugstrecke, insbesondere automatisch, festgelegt werden entlang derer sich das Fluggerät bewegen kann. Dabei können beispielsweise eine geforderte laterale Messgenauigkeit und somit eine maximal zulässige Bewegungsgeschwindigkeit bzw. ein minimal notwendiges Überlappen von Scannstreifen, beispielsweise ein Überlappen von 20% eines Streifens mit einem Benachbarten bzw. Nachfolgenden, und/oder ein vorteilhafter Abstandsbereich zur Oberfläche, um eine definierte Abstandsmessgenauigkeit zu erreichen, berücksichtigt werden. Die Scannstreifen entstehen bei einer Bewegung des Scanners bzw. einer als Scanner ausgebildeten Abtastvorrichtung relativ zu der Objektoberfläche, wobei die Bewegungsrichtung hier im Wesentlichen senkrecht zur Scannrichtung des Scanners liegen kann. Zur Steuerung kann hierfür ein ständiger Abgleich der Vermessposition des Scanners, eine Abstandsmessung des Scanners bzw. eine Abstandsmessung in Scannausrichtung zur Oberfläche vorgenommen und die Ausrichtung des Fluggeräts bestimmt werden.

Zur Vermessung einer Oberfläche kann ferner ein CAD-Modell des Objekts bekannt sein und zur Steuerung des Fluggeräts herangezogen werden. Weiters kann die Position des Fluggeräts durch das Anzielen eines Reflektors an dem Fluggerät durch einen Lasertracker und die Ausrichtung durch ein Erfassen mittels einer am Lasertracker angeordneten Kamera einer durch Leuchtdioden auf dem Fluggerät bereitgestellten Markierung bestimmt werden. Zur Initialisierung der Messung und zum Einmessen des Lasertrackers in ein Objektkoordinatensystem können mittels des Lasertrackers nun beispielsweise drei definierte Punkte am Objekt, welche koordinativ aus dem CAD-Modell bekannt sind, eingemessen werden. Ferner kann aus dem CAD-Modell eine Flugroute für ein die Messeinheit verkörperndes unbemanntes, (fern-) gesteuertes, insbesondere autonomes, Fluggerät berechnet und hinsichtlich bestimmter Messkriterien, wie z.B. Messgenauigkeit, Messdauer, Flugstabilität, Aufrecherhalten eine Sichtverbindung zwischen Fluggerät und Lasertracker und/oder Kollisionsvermeidung, optimiert werden. Weiterhin kann das Fluggerät durch lasertrackerseitige Steuersignale an eine Startposition bewegt und dort positioniert werden. Bei Erreichen der Startposition kann ein an dem Fluggerät angeordnete Triangulationsscanner aktiviert und die Vermessung des Objekts gestartet werden, indem während des Scannens durch den Scanner das Fluggerät entlang des definierten Bewegungspfads in vordefiniertem Messabstand bewegt wird und so eine Punktwolke korrespondierend zur überstrichenen Messfläche aufgebaut wird.

Analog zu diesem Messvorgang kann das Fluggerät zur Positionsbestimmung, insbesondere mit gesteigerter Genauigkeit, von mehreren miteinander in Kontakt stehenden Lasertrackern gleichzeitig angezielt werden, wodurch zusätzlich eine Vergrösserung des Aktionsradius des Fluggeräts erreicht werden kann. Alternativ oder zusätzlich kann die Positionsbestimmung fluggeräteseitig mittels von Pseudoliten bereitgestellten Signalen, welche an dem Fluggerät empfangbar sind, erfolgen, wobei eine Bestimmung der Ausrichtung des Fluggeräts dann insbesondere durch die Sensoren einer Sensoreinheit ebenfalls auf Seiten des Fluggeräts (intern) erfolgt.

Im Rahmen eines erfindungsgemässen Vermessungssystem kann eine Position und/oder ein Sollverlauf der Objektoberfläche vordefinierbar, insbesondere durch ein digitales Modell, insbesondere CAD-Modell, vorgebbar, sein, insbesondere wobei auf Basis der vordefinierten Objektoberfläche jeweilige Oberflächensollkoordinaten mit den jeweiligen 3D-Koordinaten vergleichbar sind und insbesondere wobei die Referenzierungsanordnung durch eine Referenzierung vordefinierter Referenzpunkte zur Objektoberfläche referenzierbar ist.

Weiters kann die Steuereinheit derart konfiguriert sein, dass das Fluggerät entlang einer Flugroute bewegbar ist, wobei die Flugroute in Abhängigkeit der Oberflächenposition und des Oberflächenverlaufs, insbesondere automatisch, bestimmbar ist.

Durch diese Vorkenntnisse kann beispielsweise eine Qualitätskontrolle von Objekten bzw. Fertigungserzeugnissen durchgeführt werden. Digitalisierte und bemasste Objektdarstellungen, z.B. repräsentiert durch ein CAD-Modell des Objekts, können hierfür im Vermessungssystem hinterlegt (gespeichert) sein und als Ausgangspunkt für die Objektvermessung dienen. Entsprechend der Objektposition und der Oberflächenform und -ausdehnung des Objekts kann eine Flugroute für ein unbemanntes Fluggerät, welches zur Vermessung eingesetzt werden soll, automatisch berechnet und festgelegt und das Fluggerät entlang dieser Route bewegt werden. Durch ein fortlaufendes Scannen der Objektoberfläche während der Bewegung des Fluggeräts wird eine Punktwolke mit den vermessenen Oberflächenpunkten, insbesondere mit deren Koordinaten im jeweiligen Koordinatensystem, erzeugt. Für die gescannte Oberfläche lassen sich somit gemessene Istwerte ableiten, welche z.B. die Abmessungen des Objekt, dessen Form und/oder Radien und Winkel der Oberfläche, angeben. Diese Werte können mit in dem CAD-Modell vorbestimmten Sollwerten für die Oberfläche verglichen und damit allfällige Abweichungen vom Soll festgestellt werden. Mittels eines derartigen Kontrollprozesses können insbesondere fehlerbehaftete Bauteile schnell erkannt oder eine fehlerfreie bzw. in einem Toleranzbereich liegende Fertigung bestätigt werden.

Ausserdem kann ein Monitoring, d.h. ein fortlaufendes Vermessen, von Objekten durch das Fluggerät bzw. die Abtastvorrichtung am Fluggerät erfolgen. Das Fluggerät kann hierfür auf einer vorgegebenen Route bewegt werden und diese Route immer wieder abfliegen. Dabei wird gleichzeitig eine Vermessung eines Objekts durchgeführt und Objektkoordinaten erfasst. Die Oberfläche kann dabei zum einen mittels eines Scanners vermessen zum anderen durch eine Kamera bildlich erfasst werden. Diese Koordinaten können mit definierten Sollkoordinaten fortlaufend verglichen und somit eine Form bzw. eine Veränderung der Form der Objektoberfläche ermittelt werden. Hiermit können Produktionsprozesse verfolgt und begleitend bewertet werden. Beispielsweise kann beim Auftragen einer Lackschicht auf ein Erzeugnis eine Oberflächengeometrie vor und nach dem Auftragen ermittelt werden und dadurch auf die Lackschichtdicke und in Folge auf ein Mehrgewicht des Erzeugnisses geschlossen werden. Dieses Monitoring kann damit ebenfalls zu Zwecken der Qualitätskontrolle eingesetzt werden. Zudem können nach diesem Prinzip geologische Deformationen erkannt und verfolgt werden.

Darüber hinaus kann in einem erfindungsgemässen Vermessungssystem die Flugroute und/oder eine Fluggeschwindigkeit, hinsichtlich eines Scannwegs, einer Scannzeit, einer Scanngenauigkeit, einer Bewegungsstabilität des Fluggeräts, einer Positions- und Ausrichtungsbestimmung des Fluggeräts und/oder einer Kollisionsvermeidung, insbesondere wobei ein Abstand mittels Abstandsmesssensor zu einem Gegenstand, insbesondere zu einem Hindernis, bestimmbar ist, optimiert werden.

Im Rahmen der Erfindung können weiters die Scannstreifen in Abhängigkeit der Flugroute zumindest teilweise überlappbar sein, wodurch die Scanngenauigkeit, der Scannweg und die Scannzeit einstellbar sein können und/oder wodurch die Bewegung und Ausrichtung des Fluggeräts und/oder der Abtastvorrichtung mittels einer Analyse eines Überlappungsbereichs der Scannstreifen, insbesondere durch Bildverarbeitung, bestimmbar und/oder justierbar sein können. Ausserdem können erfindungsgemäss auf Basis der vordefinierten Objektoberfläche jeweilige Oberflächensollkoordinaten mit den jeweiligen 3D-Koordinaten vergleichbar sein.

Je nach erforderlicher Messgenauigkeit kann eine Anpassung des Bewegungspfads derart erfolgen, dass sich z.B. einzelne Scannstreifen in einem dabei bestimmbaren Verhältnis überdecken und somit zum einen eine Messauflösung in diesen Bereichen gesteigert und zum anderen ein Ausrichtung bzw. eine Ausrichtungskorrektur des Fluggeräts erfolgen kann. Diese Ausrichtung kann dadurch bestimmt und gesteuert werden, dass in den Überlappungsbereichen nach übereinstimmenden Mustern in der Oberflächenstruktur gesucht und die Bewegungsrichtung oder die Ausrichtung des Fluggeräts, insbesondere die Ausrichtung der Abtastvorrichtung, anhand der Übereinstimmungen angepasst wird. Ein derartiger Vergleich von Scannbereichen kann dabei insbesondere mittels Bildverarbeitung erfolgen. Zusätzlich kann durch eine Verringerung der Relativbewegung des Fluggeräts zum Objekt und bei einer dabei konstanten Auflösung seitens der Abtastvorrichtung, insbesondere wobei ein Scannen mit einer Scannvorrichtung im Wesentlichen senkrecht zur Bewegungsrichtung des Fluggeräts erfolgt, eine Erhöhung der Punktauflösung in der erzeugten Punktwolke durchgeführt werden. Im Gegensatz dazu kann bei ebenfalls konstanter Scannauflösung und Geschwindigkeitssteigerung die Punktauflösung kleiner werden, jedoch kann gleichzeitig die für die Vermessung benötigte Zeit abnehmen.

Weiters kann durch eine Variation des Messabstandes von dem Fluggerät bzw. der Abtast- bzw. Scannvorrichtung zur Objektoberfläche Einfluss auf die Genauigkeit und auch auf die benötigte Zeit für die Messung genommen werden. Der Messabstand kann beispielsweise zwischen einem und 50 Zentimetern, insbesondere zwischen fünf und 20cm, liegen. Für kleine Abstände kann damit die Genauigkeit der Messung gesteigert und dabei gleichzeitig ein mit dem Scanner überstrichener Scannbereich bzw. die Breite eines Scannstreifens verkleinert werden. Folglich kann die Messdauer des Vermessungsvorgangs zunehmen (bei gleich bleibender Relativgeschwindigkeit des Fluggeräts zum Objekt), da eine grössere Anzahl von Scannstreifen zur erforderlichen Vermessung des Objekts erstellt werden muss.

Eine Optimierung des Bewegungspfads kann zudem hinsichtlich der Bewegungs- bzw. Flugstabilität durchführbar sein. Insbesondere zur Vermeidung enger mit dem Fluggerät zu bewältigender Flugradien und einer damit zu erreichende "runden" Bewegung, insbesondere bei Richtungswechseln, d.h. einer Bewegung des Fluggeräts weitestgehend ohne Ausgleichsbewegungen und/oder starke oder langandauernden Brems- und Beschleunigungsphasen der Einheit, kann diese Art der Pfadoptimierung erfolgen.

Ausserdem kann die Bewegungsoptimierung zur Gewährleistung einer im Wesentlichen ständigen Sichtverbindung zwischen der externen Referenzierungsanordnung und dem Fluggerät erfolgen, damit die Referenzierung bzw. die Positionsbestimmung und die Bestimmung der Ausrichtung des Fluggeräts fortlaufend erfolgen und das Fluggerät zuverlässig gesteuert werden kann. Weiters kann durch die Optimierung des Bewegungspfads beispielsweise eine Kollision mit Hindernissen, wie Robotern oder beweglichen Maschinenteilen, verhindert werden. Solche Hindernisse können überdies in dem gespeicherten CAD-Modell berücksichtigt sein und/oder durch zusätzlich an dem Fluggerät vorgesehen Sensoren, z.B. Radarsensoren, erkannt werden.

Im Rahmen der Erfindung kann die Referenzierungsanordnung eine Positionsbestimmungsanordnung, die derart ausgestaltet ist, dass die äussere Vermessposition der Abtastvorrichtung in Bezug zum Objektkoordinatensystem bestimmbar ist, und/oder eine Ausrichtungsbestimmungsanordnung, die derart ausgestaltet ist, dass eine Vermessausrichtung der Abtastvorrichtung in Bezug zum Objektkoordinatensystem bestimmbar ist, aufweisen.

Weiterhin kann erfindungsgemäss die Vermessposition und die Vermessausrichtung der Abtastvorrichtung durch ein bekanntes Positionsverhältnis und Ausrichtungsverhältnis vom Fluggerät zur Abtastvorrichtung bestimmbar sein, insbesondere wobei eine Fluggerätposition und eine Fluggerätausrichtung durch die Referenzierungsanordnung bestimmbar sind.

Mit der Bestimmung der Referenzierungsinformationen können die aktuelle Ausrichtung und die aktuelle Position der Abtasteinheit bestimmt werden, wobei eine derartige Bestimmung mit einer jeweiligen Referenzierungsanordnung - Positions- und/oder Ausrichtungsbestimmungsanordnung - erfolgen kann. Beispielsweise kann die Abtastvorrichtung zur Positionsbestimmung, insbesondere mit einem Laserstrahl, angezielt und gleichzeitig die Ausrichtung der Vorrichtung visuell, insbesondere mit einer Videokamera, erfasst werden. Aus einem derart erfassten Bild der Abtastvorrichtung kann mittels Bildverarbeitung und einer Kennzeichnung seitens der Abtastvorrichtung deren Ausrichtung abgeleitet werden. Zur Bestimmung der Vermessausrichtung und der Vermessposition der Abtastvorrichtung muss ferner nicht direkt diese Vorrichtung referenziert werden, sondern alternativ oder zusätzlich kann eine Referenzierung des Fluggeräts nach oben beschriebenem Prinzip erfolgen, wobei eine Relation von Fluggeräteposition und Fluggeräteausrichtung zu Vermessposition und Vermessausrichtung bekannt ist und durch ein In-Verhältnis-Setzen mittelbar die Ausrichtung und Position der Abtastvorrichtung bestimmt werden kann.

Zur Referenzierung kann in einem erfindungsgemässen Vermessungssystem die Abtastvorrichtung und/oder das Fluggerät einen Reflektor und die Referenzierungsanordnung ein geodätisches Vermessungsgerät, insbesondere Totalstation oder Lasertracker, aufweisen. Das geodätisches Vermessungsgerät kann dabei eine Strahlungsquelle zur Erzeugung eines optischen Messstrahls zur Entfernungsmessung, eine eine Stehachse definierenden Basis und eine Strahllenkeinheit zur Emission des Messstrahls und zum Empfang von zumindest einem Teil des am Reflektor reflektierten Messstrahls aufweisen, wobei die Strahllenkeinheit zur Ausrichtung einer optischen Zielachse um die Stehachse und eine im Wesentlichen orthogonal zur Stehachse stehende Neigungsachse relativ zur Basis motorisiert schwenkbar ist. Zusätzlich können eine Winkelmessfunktionalität zur hochpräzisen Erfassung der Ausrichtung der Zielachse und Auswertemittel zur Datenspeicherung und Steuerung der Ausrichtung der Strahllenkeinheit vorgesehen sein. Der optische Messstrahl kann ferner auf den Reflektor, insbesondere fortlaufend, ausrichtbar sein, sodass die Vermessposition der Abtastvorrichtung und/oder eine Fluggerätposition bestimmbar sind.

In Verbindung mit einer Totalstation kann diese im Speziellen eine Anzieleinrichtung, insbesondere ZielFernrohr, aufweisen, wobei eine Stütze gegenüber einer Basis des Vermessungsgeräts und die Anzieleinrichtung gegenüber der Stütze zur Änderung der Ausrichtung der Anzieleinrichtung motorisiert schwenkbar ist und die Anzieleinrichtung zumindest eine eine optische Zielachse definierende Emissionseinheit und eine Strahlungsquelle zur Emission eines optischen Messstrahls zur Entfernungsmessung parallel, insbesondere koaxial, zur optische Zielachse, aufweist.

Hinsichtlich der Konstruktion von Lasertrackern oder Laserscannern kann die Strahlungsquelle beispielsweise in einer Stütze, die um eine durch die Basis definierte Stehachse relativ zur Basis schwenkbar ausgeführt ist, oder in der Basis vorgesehen sein, wobei die emittierte Strahlung mittels optischer Strahlführungselemente zu einer Anzieleinheit geführt werden kann. In diesem Zusammenhang kann die Anzieleinheit beispielsweise als Strahlumlenkelement (z.B. Spiegel) ausgebildet sein.

Insbesondere kann dabei ein zu der Abtastvorrichtung und/oder zu dem Fluggerät übermittelbares Signal eine Positionsinformation, wobei die Positionsinformation in einer ersten dem Fluggerät zugeordneten Verarbeitungseinheit in Steuerungsdaten zur Steuerung des Fluggeräts umsetzbar ist, oder die Steuerungsdaten zur Steuerung des Fluggeräts, wobei die Steuerungsdaten mittels einer zweiten der Referenzierungsanordnung zugeordneten Verarbeitungseinheit aus der Positionsinformation ermittelbar sind, aufweisen.

Alternativ oder auch zusätzlich kann die Referenzierungsanordnung mindestens einen GNSS-Satelliten aufweisen, insbesondere repräsentiert durch GPS, GLONASS oder Galileo, wobei der GNSS-Satellit GNSS-Signale bereitstellt, und die Abtastvorrichtung und/oder das Fluggerät eine Empfangseinheit aufweisen, insbesondere eine GNSS-Antenne, sodass die GNSS-Signale empfangbar und die Vermessposition der Abtastvorrichtung aus den empfangenen GNSS-Signalen bestimmbar sind.

Insbesondere kann erfindungsgemäss die Referenzierungsanordnung ein Pseudo-Satelliten-Modul zur Aussendung von Positionierungssignalen aufweisen und die Empfangseinheit der Abtastvorrichtung und/oder des Fluggeräts derart ausgebildet sein, dass die Positionierungssignale empfangbar und die Vermessposition und/oder die Vermessausrichtung der Abtastvorrichtung aus den empfangenen Positionierungssignalen bestimmbar sind.

Um eine Übertragung von Koordinaten, die lokal mit der Abtastvorrichtung bzw. einem Scanner an der Messobjektoberfläche vermessen wurden, in ein übergeordnetes Koordinatensystem durchführen zu können, kann die Abtastvorrichtung in Bezug zu diesem Koordinatensystem referenziert werden, d.h. eine jeweilige Position und Ausrichtung der Abtastvorrichtung wird mit den jeweils vermessenen Punkten verknüpft.

Hierfür kann als Referenzierungsanordnung beispielsweise ein Vermessungssystem (Lasertracker) oder ein GNSS-System bzw. ein Pseudo-Satelliten-System, benutzt werden, wobei ein an dem Fluggerät angeordnetes Modul mit einem dieser externen Systeme interagiert oder wobei ein an dem Fluggerät angebrachtes Muster zur passiven Bestimmung dient.

Bei einer Vermessungsanordnung in einer Referenzierungsanordnung, welche z.B. durch einen Lasertracker oder eine Totalstation verkörpert werden kann, können das Fluggerät und/oder die Abtastvorrichtung über eine Reflektor oder ein einen Messstrahl reflektierendes Modul verfügen, wobei der Reflektor einen Messstrahl in Richtung einer Strahlquelle rückreflektieren kann. Das Vermessungssystem kann dabei über eine Anzieleinrichtung verfügen, wobei die Einrichtung in zwei Achsen automatisch und motorisiert ausrichtbar sein kann und somit einen der Zieleinheit zugeordneten Laserstrahl auf den Reflektor zielgenau ausrichten kann. Weiters kann das System Sensoren zur Messung der Ausrichtewinkel aufweisen. In dieser Konstellation kann bei einem Anzielen des Reflektors eindeutig die relative Position des Fluggeräts und/oder der Abtastvorrichtung zum Lasertracker bestimmt werden. Weiterhin kann der Lasertracker sich durch Anmessen definierter Referenzpunkte auf einem zu vermessenden Objekt in ein Objektkoordinatensystem einmessen und damit ein relative Vermessposition der Abtastvorrichtung zum Objekt ableitbar machen. Zur Steuerung des Fluggeräts können diese Positionsinformationen und allfällige Ausrichtungsinformationen an das Fluggerät bzw. an die Abtastvorrichtung übermittelt werden. Dies kann zum einen in Form genannter Information geschehen, wobei diese Information im Fluggerät oder der Abtastvorrichtung in Steuerdaten umgesetzt werden kann, zum anderen können aus dieser Information schon in der Vermessungsstation Steuerungsdaten generiert und zur Steuerung an das Fluggerät und/oder die Abtastvorrichtung übermittelt werden.

Eine Referenzierung bzw. Bestimmung der Vermessungsposition kann auch mittels GNSS-Daten bzw. mittels Signalen, welche in einer Halle von Pseudo-Satelliten ausgesendet werden, gelingen. Hierzu kann das Fluggerät bzw. die Abtastvorrichtung über geeignete Empfangsmittel verfügen und aus den empfangenen, Positionsinformationen repräsentierenden Signalen eine Eigenposition bestimmen.

Analog zur Aussendung und zum Empfangen von GNSS-ähnlichen Signalen von Pseudo-Satelliten kann ein Aussenden von UWB-Signalen (Ultra-Breitband-Signalen) durch entsprechende Ultra-Breitband-Sender und ein Empfangen auf Seiten des Fluggeräts durch einen passenden Empfänger erfolgen. Aus einer Anzahl empfangener Signale, insbesondere mindestens dreier solcher Signale, verschiedener Sender kann wiederum einer Positionsbestimmung des Fluggeräts erfolgen. Hierfür kann beispielsweise eine Trilateration anhand der Signale und bekannter Positionen der Sender durchgeführt werden.

Im Rahmen der Erfindung kann die Referenzierungsanordnung eine der Abtastvorrichtung und/oder dem Fluggerät zugeordnete Sensoreinheit zur Bestimmung der Vermessausrichtung und/oder der Vermessposition der Abtastvorrichtung aufweisen, insbesondere einen Neigungssensor, ein Magnetometer, einen Beschleunigungssensor, einen Drehratensensor und/oder ein Geschwindigkeitssensor. Ferner kann die Abtastvorrichtung und/oder das Fluggerät eine die Vermessausrichtung angebende Markierung, insbesondere ein definiertes Muster, ein Pseudo-Random-Pattern, einen Barcode und/oder eine Leuchtdiode, aufweisen und die Referenzierungsanordnung eine Erfassungseinheit, insbesondere Kamera, zur Erfassung der Markierung und zur Bestimmung der Vermessausrichtung der Abtastvorrichtung aus der Lage und Anordnung der Markierung aufweisen. Mit einer derartigen Ausgestaltung der Referenzierungsanordnung kann eine Referenzierung hinsichtlich der Ausrichtung der Abtastvorrichtung bzw. des Fluggeräts bzw. der Vermessausrichtung erfolgen. So kann die Ausrichtung mittels der internen Sensoren bestimmt und/oder mit Videokamera und Bildverarbeitung eines mit der Kamera aufgenommenen Bildes der Abtastvorrichtung oder des Fluggeräts - je nach Lage und Anordnung einer zur Ausrichtungsbestimmung vorgesehene Markierung - erfasst und abgeleitet werden. Die Sensoreinheit zur Bestimmung der Ausrichtung kann dabei eine so genannte IMU (Inertial Measurement Unit) mit drei Beschleunigungs-, drei Drehratensensoren in Kombination mit einem 3-Achs-Magnetometer aufweisen. Bei einer Orientierungsbestimmung des Fluggeräts anhand der Markierungen am Fluggerät können diese in einer bekannten Anordnung vorgesehen, d.h. bekannt relativ zueinander platziert und ausgerichtet, sein. Diese Markierungen oder zumindest Teile davon können dann mittels einer Kamera am Lasertracker erfasst werden. Aus der relativen Lage und Ausrichtung der Markierungen zueinander auf dem dabei erfassten Bild kann so, insbesondere mittels Bildverarbeitung, die Ausrichtung bzw. Orientierung des Fluggeräts abgeleitet werden. Die Markierungen können hierfür z.B. als LEDs (Leuchtdioden) ausgeführt sein. Aus dieser Bestimmung können drei Rotationsfreiheitsgrade des Fluggeräts bzw. der Abtastvorrichtung bestimmt werden. Zusammen mit der Positionsbestimmung durch das Anzielen des Reflektors durch den Lasertracker, wobei drei Translationsfreiheitsgrade bestimmt werden können - auch durch die Positionsbestimmung mittels Pseudo-Satelliten können diese drei Translationsfreiheitsgrade bestimmt werden-, können sechs Freiheitsgrade, drei translatorische und drei rotatorische, und eine exakte Lage und Orientierung des Fluggeräts im Raum bestimmt werden.

Weiters kann das Bestimmen der Ausrichtung durch ein Verfahren durchgeführt werden, wobei ein Emittieren eines Laserstrahls in Richtung eines an der Zieleinheit, d.h. am Fluggerät oder der Abtastvorrichtung, angeordneten Detektors erfolgt und eine Aussendrichtung des Laserstrahls z.B. von der Ausrichtungsbestimmungsanordnung definiert wird. Es folgt ein Bestimmen eines Auftreffpunktes des Laserstrahls auf dem Detektor. Aus diesem Auftreffpunkt wird die Einfallsrichtung des Strahls abgeleitet. Anhand eines Verknüpfens der Einfallsrichtung mit der Aussendrichtung ist nun das Bestimmen der Ausrichtung des Detektors relativ zur Laserquelle und damit der Zieleinheit möglich. Ein solches Verfahren ist z.B. aus der WO 2008/138507 bekannt.

Ein ähnliches Verfahren zur Ausrichtungsbestimmung wird beispielsweise in der WO 2006/097408 beschrieben. Die Orientierung kann hier anhand eines Versatzes eines Empfängers zu einer Messstrahlachse, die durch einen den Empfänger anzielenden Messstrahl definiert wird, bestimmt werden, wobei die Einfallsrichtung aus einem Auftreffpunkt des Messstrahls auf dem Detektor bzw. auf einem Teilerfassungsbereich des Detektors abgeleitet wird.

Bei einer weiteren bekannten Möglichkeit, Informationen über die Orientierung des Fluggeräts bereitzustellen, wird die Position des Fluggeräts verfolgt und aus den Positionsänderungen eine Bewegungsrichtung bestimmt. Mit der Annahme, dass die Bewegungsrichtung einer bestimmten-Orientierung des Fluggeräts entspreche, kann daraus Information über die Orientierung des Fluggeräts abgeleitet werden. Die Positionsänderung kann z.B. mittels einer fortlaufenden Positionsbestimmung durch GPS bestimmt werden.

Zudem kann die Position und Drehlage bzw. Ausrichtung eines Objekts im Raum mittels einer optischen Messvorrichtung erfolgen. Die Messvorrichtung kann dabei eine Abbildungsoptik und einen in zwei Dimensionen ortsauflösenden Detektor aufweisen. Das Objekt bzw. das Fluggerät kann ein bekanntes Codemuster, z.B. einen Barcode oder Pseudo-Random-Code, aufweisen und das mit der Messvorrichtung erfasste Muster ausgewertet werden. Je nach Lage des erfassten Codes kann dadurch auf die jeweilige Lage des Fluggeräts im Raum geschlossen werden. Ein diesem Prinzip entsprechendes Verfahren wird beispielsweise in der EP 1 066 497 geoffenbart.

Ausserdem können zur Bestimmung der Ausrichtung des Fluggeräts und/oder der Abtastvorrichtung mehrere Empfänger an der Drohne angeordnet sein, wobei jeder Empfänger jeweils Signale von einem Pseudoliten empfangen kann. Dadurch kann für jeden Empfänger eine Position im Koordinatensystem bestimmt und aus einer bekannten Anordnung und Lage der Empfänger am Fluggerät zueinander eine Ausrichtung des Fluggeräts bestimmt werden.

Die vorgenannten Möglichkeiten zur Bestimmung einer Ausrichtung können in Kombination mit einer Positionsbestimmung des Fluggeräts zur exakten Bestimmung der sechs Freiheitsgrade (six degrees of freedom, 6-DoF) und somit der genauen Lage des Fluggeräts im Raum dienen. Eine Bestimmung der sechs Freiheitsgrade und damit eine Referenzierung der Ausrichtung und der Position des Fluggeräts bzw. der Abtastvorrichtung kann zudem dadurch erfolgen, dass das Fluggerät und/oder die Abtastvorrichtung mit einer oder mehreren Kameras definierte Muster in einer Umgebung, insbesondere in einem Arbeitsbereich in einer Fertigungshalle, erfasst und aus dem erfassten Muster die Position und Orientierung des Fluggeräts ableitbar ist. Die Muster können hierfür z.B. an Wänden, Decke und/oder am Boden angeordnet und als so genannte Pseudo-Random-Patterns ausgestaltet sein.

Alternativ oder zusätzlich kann die Referenzierungsanordnung als optisches System ausgebildet sein, welches optische Emitter zur Emission jeweils einer schwenkbaren Referenzebene, insbesondere einer Laserebene, aufweist. Indem diese Emitter durch die aufgespannten Ebenen jeweils eine Positionsinformation bereitstellen, fungieren sie somit als eine Art "optische Pseudoliten". Zur Durchführung einer Positionsbestimmung können ferner Detektoren und/oder Reflektoren am Fluggerät und/oder der Abtastvorrichtung vorgesehen sein, die die ausgesendete optische Strahlung erfassen oder reflektieren können und damit eine Positionsbestimmung erlauben. Durch die Verwendung von mehreren Emittern kann hierbei beispielsweise der erfassbare Arbeitsraum vergrössert bzw. die Entstehung einer Sichtbehinderung zwischen dem Fluggerät und allen verfügbaren Emittern verhindert und somit das System redundant gestaltet werden.

Erfindungsgemäss kann die Referenzierungsanordnung eine Entfernungs-Bilderfassungseinheit aufweisen, insbesondere eine RIM-Kamera (Range Imaging), zur Erfassung eines Bildes des Fluggeräts, wobei eine Kontur und/oder bild-punktabhängige Abstandsdaten zum Fluggerät aus dem Bild ableitbar sind und daraus die Vermessausrichtung und/oder die Vermessposition bestimmbar sind. Ferner kann das Fluggerät eine Umgebungserfassungseinheit, insbesondere eine Kamera, zur Erfassung einer in einer Messumgebung angeordneten Positionsmarkierung aufweisen, insbesondere eines definierten Musters oder eines Pseudo-Random-Patters, wobei aus einer Lage und Orientierung der auf einem Bild erfassten Positionsmarkierung die Bestimmung der Vermessausrichtung und/oder der Vermessposition durchführbar ist.

Mit einer der Referenzierungsanordnung zugeordneten Entfernungs-Bilderfassungseinheit kann das Fluggerät punktaufgelöst erfasst und jedem Bildpunkt bzw. jeweils einer Gruppe von Bildpunkten ein Entfernungswert zugeordnet werden. Dieses Prinzip des "Range Imaging" kann in einer Kamera realisiert sein, wobei diese Kamera auf das Fluggerät gerichtet wird und so dieses bildmässig erfassen kann. Aus den erfassten Daten kann dann beispielsweise eine Kontur des Fluggeräts abgeleitet und mit einer bekannten Sollkontur verglichen werden bzw. kann die erfasste Kontur räumlich derart transformiert werden, dass eine Übereinstimmung mit der Sollkontur erreicht wird. Durch eine daraus ermittelbare Lage der erfassten Kontur relativ zur Sollkontur kann auf die Orientierung des Fluggeräts geschlossen werden. Ausserdem kann eine Ausrichtungsbestimmung nach obigem Prinzip mittels an dem Fluggerät angebrachter Marken erfolgen. Durch die Erfassung von Entfernungswerten können, z.B. über eine Mittelung von Entfernungswerten oder durch Ausgleichsrechnung, zudem die Entfernung zwischen der Kamera und dem Fluggerät abgeleitet und somit alle sechs Freiheitsgrade bestimmt werden.

Mit einem ungekehrten Vorgehen, nämlich einer Erfassung von einer Markierung in einer Umgebung des Fluggeräts durch eine am Fluggerät angebrachte Kamera, kann ebenfalls eine Position und Orientierung des Fluggeräts ermittelt werden. Die Lage und der Markierungen in der Messumgebung können dafür bereits bekannt bzw. genau definiert sein. Hierfür können mit der Kamera beispielsweise definierte Muster erfasst und aus deren Lage und Grösse auf dem erfassten Bild auf die Vermessausrichtung und/oder der Vermessposition geschlossen werden.

Gegenstand der Erfindung ist weiterhin ein Verfahren zum Bestimmen von 3D-Koordinaten, insbesondere von einer Vielzahl von 3D-Koordinaten, von Messpunkten einer Objektoberfläche, insbesondere eines industriellen Erzeugnisses, in einem äusseren Objektkoordinatensystem. Dafür sind ein, insbesondere punktweises, räumlich versetzbares, lokales, auf dem Triangulationsprinzip basierendes, optisches Abtasten der Messpunkte der Objektoberfläche und Bestimmen von lokalen Messpunktkoordinaten in einem inneren Abtastkoordinatensystem, ein Erzeugen von Referenzierungsinformationen, insbesondere einer äusseren Vermessposition und Vermessausrichtung, zum Referenzieren der lokalen Messpunktkoordinaten in dem äusseren Objektkoordinatensystem und ein Bestimmen der 3D-Koordinaten der Messpunkte im äusseren Objektkoordinatensystem in Abhängigkeit der lokalen Messpunktkoordinaten und der Referenzierungsinformationen, sodass die lokalen Messpunktkoordinaten als 3D-Koordinaten in dem äusseren Objektkoordinatensystem, insbesondere als Punktwolke, vorliegen, vorgesehen. Ferner erfolgt ein Versetzen des Abtastens durch ein unbemanntes, steuerbares, auto-mobiles Fluggerät, insbesondere wobei das Fluggerät schwebend ausgerichtet und bewegt wird. Weiters wird das Fluggerät erfindungsgemäss unter Berücksichtigung von jeweils aktuell bestimmten inneren Messpunktkoordinaten und/oder unter Berücksichtigung von einer durch ein digitales Modell vordefinierten Objektoberfläche entlang einer durch das digitale Modell definierten Flugroute automatisch gesteuert relativ zur Objektoberfläche unter Einhaltung eines vordefinierten Messabstandsbereichs, insbesondere Messabstands, bewegt.

Mit einem derartigen Verfahren, insbesondere durch ein Versetzen einer Abtastposition, können Oberflächenkoordinaten von Objekten voll automatisch bestimmt werden, wobei ein Erfassen von Messpunkten der Oberfläche fliegend, insbesondere mit einer fortlaufenden bzw. kontinuierlichen Versetzen des Abtastens, mit einem Fluggerät erfolgt. Allein durch dieses Erfassen können jedoch globale Objektinformationen nicht gewonnen werden, sondern lediglich jeweils lokale Messpunkte abgetastet bzw. vermessen werden. Für ein Erzeugen einer globalen Objektinformation, d.h. eines Oberflächenverlaufs in einem Objektkoordinatensystem, wie einer die Oberfläche repräsentierenden Punktwolke müssen die jeweils vermessen Punktkoordinaten in ein übergeordnetes Koordinatensystem übertragen und zusammengeführt werden. Mittels einer Referenzierung zwischen den beiden Koordinatensystemen kann eine solche Übertragung im vorliegenden Fall realisiert werden. Als Ergebnis erhält man ein punktaufgelöstes Objektabbild, welches insbesondere zur Qualitätssicherung durch Vergleichen des Abbilds mit Sollwerten eingesetzt werden kann.

Erfindungsgemäss wird das Fluggerät in Abhängigkeit der, insbesondere fortlaufend bestimmten, äusseren Vermessposition und äusseren Vermessausrichtung und eines Vermessabstands zur Objektoberfläche automatisch gesteuert relativ zur Objektoberfläche bewegt und ausgerichtet. Hierdurch kann eine Objektoberfläche automatisch zielgenau vermessen werden, indem das Fluggerät ständig in Abhängigkeit des Abstands des Fluggeräts zur Oberfläche und der jeweiligen Ausrichtung und Positionierung zur Oberfläche die Bewegung der Objektoberfläche anpassend gesteuert wird. Das Fluggerät kann hierbei zusätzlich automatisch zum zu vermessenden Objekt ausgerichtet werden.

Im Rahmen des erfindungsgemässen Verfahrens kann das Vermessen der Messpunkte optisch scannend, insbesondere mit einer Scannvorrichtung, wobei Scannstreifen erzeugt werden, und/oder optisch mit einem Bild-Sequenzen verwendenden Messsystem zum Bestimmen der Messpunktkoordinaten erfolgen. Je nach Anforderung an den Messprozess kann ein passendes Vermessen am Objekt durchgeführt werden. Die jeweilige Vermessungsmethode kann beispielsweise abhängig von einer geforderten Punktauflösung oder einer Vermessgeschwindigkeit gewählt und die Objektoberfläche entsprechend vermessen werden. Linienscanner oder Triangulationsscanner stellen hierbei gängige Vermessmittel dar, mit denen ein zeilenweises Vermessen der Oberfläche durchgeführt werden kann. Bei einer gleichzeitigen Relativbewegung des Scanners, insbesondere senkrecht zur internen Scannrichtung, kann so ein flächiges Vermessen erfolgen.

Ferner kann im Rahmen der Erfindung ein vollständig autonomes Datenerfassen durch das Fluggerät erfolgen. Dafür kann das Fluggerät nach Starten eines Messprozesses eine Messumgebung, die insbesondere mittels einer Definition eines Messbereichs bzw. Messvolumens vorgegeben werden kann, selbsttätig erkunden und sich innerhalb dieser Messumgebung bewegen und dabei Messdaten, d.h. Abstände zu Punkten und Koordinaten der Punkte, sammeln. Dadurch kann nach und nach das Messvolumen vollständig ausgemessen und ein digitales, geometrisches Modell, z.B. auf CAD-Basis, davon erstellt werden. Das Fluggerät kann hierfür beispielsweise durch das Innere eines Messobjekts, beispielsweise eines Flugzeugs, fliegen, wobei z.B. die Innenwände und technische Vorrichtungen im Innenraum mittels der Scannvorrichtung erfasst und vermessen werden können, und eine Flugroute fortlaufend automatisch so anpassen, dass eine Bewegung des Fluggeräts zu noch nicht vermessenen Bereichen erfolgt. Zudem kann das Fluggerät auf Basis dieser Messungen allfällige Hindernisse umfliegen und damit die Vermessung auch komplexer Innenräume bzw. Objekte bereitstellen. Nach dem selbstständigen vollständigen Vermessen der Messumgebung kann das Fluggerät zu seinem Ausgangspunkt zurückkehren, dort landen und die gesammelten Daten zur Verfügung stellen.

Erfindungsgemäss können alternativ oder zusätzlich eine Position und/oder ein Sollverlauf der Objektoberfläche vordefiniert werden, insbesondere durch ein digitales Modell, insbesondere CAD-Modell, vorgegeben werden, insbesondere wobei auf Basis der vordefinierten Objektoberfläche jeweilige Oberflächensollkoordinaten mit den jeweiligen 3D-Koordinaten verglichen werden und insbesondere wobei die Referenzierungsanordnung durch ein Referenzieren vordefinierter Referenzpunkte zur Objektoberfläche referenziert wird. Zudem kann das Fluggerät entlang einer Flugroute bewegt werden, wobei die Flugroute in Abhängigkeit der Oberflächenposition und des Oberflächenverlaufs, insbesondere automatisch, bestimmt werden kann.

Durch Vorgabe einer Solloberfläche kann basierend darauf ein Steuern des Fluggeräts entlang der Oberfläche erfolgen, wobei ferner ein definierter Abstand zwischen Oberfläche und Fluggerät eingehalten und in diesem Abstand eine Flugroute abgeflogen werden kann.

Erfindungsgemäss kann die Flugroute und/oder eine Fluggeschwindigkeit, hinsichtlich eines Scannwegs, einer Scannzeit, einer Scanngenauigkeit, einer Bewegungsstabilität des Fluggeräts, einer Positions- und Ausrichtungsbestimmung des Fluggeräts und/oder einer Kollisionsvermeidung, insbesondere wobei ein Abstand zu einem Gegenstand, insbesondere zu einem Hindernis, bestimmt werden kann, optimiert werden.

Dabei können weiterhin die Scannstreifen in Abhängigkeit der Flugroute zumindest teilweise überlappt werden, wodurch die Scanngenauigkeit, der Scannweg und die Scannzeit eingestellt werden können und/oder die Bewegung und Ausrichtung des Fluggeräts und/oder der Vermessausrichtung mittels einer Analyse eines Überlappbereichs der Scannstreifen, insbesondere durch Bildverarbeiten, bestimmt und/oder justiert werden können.

Das Optimieren bzw. Anpassen der Flugroute kann je nach Messanforderung durchgeführt werden und/oder automatisiert ablaufen. Beispielsweise kann die Flugroute derart automatisch festgelegt werden, dass die Bewegung des Fluggeräts eine Flugkurve beschreibt, die im Wesentlichen frei von engen Kurvenradien ist und dadurch ein weitgehend homogenes Fortbewegen des Fluggeräts ermöglicht. Somit können, insbesondere abrupte, Abbrems- oder Beschleunigungsmanöver verhindert oder vermindert werden und in Folge ein Messzeitverkürzung und eine Messgenauigkeitssteigerung erreicht werden. Auch kann eine Berücksichtigung von Hindernissen, wie beispielsweise beweglichen Maschinenteilen, in einer Flugbahn erfolgen und eine automatische Anpassung durchgeführt werden. Weiters kann ein Sichtkontakt zwischen Fluggerät und einer mit dem Gerät interagierenden Vorrichtung zur Verbesserung der Steuerungseigenschaften durch Bahnanpassung aufrechterhalten werden.

Mit einer Wahl des Überlappungsverhältnisses von bei dem Versetzen des Abtastens entstehenden Scannstreifen, beispielsweise einer Überlappung zwischen 5% und 50% einer Streifenbreite, kann überdies die Scanngenauigkeit gesteuert werden. Damit einhergehend kann dies Auswirkungen auf die Scanngeschwindigkeit und -zeit haben, wobei eine Erhöhung der Genauigkeit durch eine grössere Überlappung eine Erhöhung der Messzeit zur Folge haben kann. Auch können sich dabei Geschwindigkeit und Zeit gegenläufig verhalten, d.h. bei einer Erhöhung der Scanngeschwindigkeit nimmt die benötigte Scannzeit ab. Durch die beschriebene Überlappung kann ferner eine Ausrichtung und Bewegung des Fluggeräts kontinuierlich "on-the-fly" erfolgen. Dafür können die überlappenden Bereiche bildverarbeitungsmässig analysiert werden, wobei dabei beispielsweise nach übereinstimmenden Mustern in zwei benachbarten überlappten Streifen gesucht und darauf basierend eine Ausrichtung bzw. Positionsreferenzierung erfolgen kann.

Zudem können erfindungsgemäss im Rahmen des Verfahrens Positionierungssignale, insbesondere von Pseudo-Satelliten bereitgestellte Signale und/oder GNSS-Signale, empfangen werden, insbesondere wobei die GNSS-Signale repräsentiert werden durch GPS-, GLONASS- oder Galileo-Signale, und die äussere Vermessposition aus den empfangenen Positionierungssignalen bestimmt werden, und/oder es kann das Bestimmen der äusseren Vermessposition mittels eines, insbesondere am Fluggerät, reflektierten Messstrahls erfolgen.

Für ein Referenzieren, durch die eine Übertragung der Messkoordinaten von einem inneren in ein äusseres Koordinatensystem vollzogen werden kann, können Signale zur relativen oder absoluten Positionsbestimmung des Fluggeräts bereitgestellt und am Fluggerät empfangen werden. Die durch das Abtasten erfassten Messkoordinaten können somit mit einer jeweiligen äusseren Positions- und/oder Zeitinformation verknüpft und aus dieser Datenkombination die relative Position zu einem zu vermessenden Objekt und/oder eine geodätisch genaue Position der gemessenen Punkte abgeleitet werden. Ausserdem kann zum Referenzieren ein Messstrahl, z.B. ein Laserstrahl an dem Fluggerät, insbesondere an einer dafür vorgesehen Reflexionseinheit, reflektiert und aus dem reflektierten Strahl ein Positionsbestimmen des Fluggeräts und damit ein Referenzieren erfolgen. Der Messstrahl kann weiters fortlaufend bzw. kontinuierlich auf das Fluggerichtet ausgerichtet werden und ein Referenzieren ständig erfolgen.

Erfindungsgemäss kann das Bestimmen der Vermessausrichtung in Nick-, Roll- und Gierrichtung erfolgen, insbesondere wobei das Bestimmen mittels einer internen, dem Fluggerät zugeordneten Sensoreinheit, insbesondere mittels Neigungssensor, Magnetometer, Beschleunigungssensor, Drehratensensor und/oder Geschwindigkeitssensor erfolgen kann. Alternativ oder zusätzlich kann das Bestimmen der Vermessausrichtung mittels Zusammenwirken einer dem Fluggerät zugeordneten, die Vermessausrichtung angebenden Markierung, insbesondere Leuchtdioden, und einem Erfassen, insbesondere mittels Kamera, der Markierung zum Bestimmen der Vermessausrichtung aus einer Lage und Anordnung der Markierung erfolgen.

Das Bestimmen der sechs Freiheitsgrade - von drei translatorischen und drei rotatorischen - des Fluggeräts kann weiterhin durch ein Bestimmen der Ausrichtung des Geräts erfolgen. Hierfür können dem Fluggerät zugeordnete, d.h. interne, Sensoren verwendet werden. Beispielsweise kann eine IMU (Inertial Measurement Unit) - zumeist drei Beschleunigungs-, drei Drehratensensoren - und ein dreiachsiges Magnetometer in das Fluggerät integriert sein, mit der fortlaufend die exakte Ausrichtung des Fuggeräts relativ zum Gravitationsfeld und azimutal erfolgen kann. So kann unabhängig von einer Sichtverbindung des Fluggeräts zu einer Erfassungseinheit die Ausrichtung präzise bestimmt und für die Steuerung des Fluggeräts berücksichtigt werden. Besteht eine derartige Sichtverbindung beispielsweise zu einer Kamera, so können durch die Kamera Markierungen, die an dem Fluggerät vorgesehen sind erfasst und deren Lage und Ausrichtung auf einem erfassten Bild, insbesondere durch Bildverarbeiten, ausgewertet werden. Hieraus kann ebenfalls die Ausrichtung des Fluggeräts relativ zur Kamera, bei Kenntnis der Position der Kamera in bis zu drei Achsen relativ zu einem Koordinatensystem bestimmt werden.

Insbesondere kann erfindungsgemäss die Vermessausrichtung parallel, insbesondere selbsttätig, zur Lotrichtung und/oder definiert relativ zur Fluggerätausrichtung ausgerichtet werden, insbesondere durch eine kardanische Aufhängung und/oder durch Ausrichtmittel zum definierten Ausrichten der Vermessausrichtung, insbesondere wobei ein Schwenken in zwei, insbesondere in drei, Achsen erfolgen kann. Alternativ oder zusätzlich können Informationen und/oder Steuerbefehle, insbesondere Objektdaten, in das Fluggerät eingegeben werden, und/oder Informationen, insbesondere die erzeugte Punktwolke, insbesondere auf einem Display, ausgegeben werden.

Beim Vermessen bzw. Abtasten von Objekten kann eine stetige durch eine kardanische Aufhängung realisiert parallele Ausrichtung des Abtastens bzw. der Vermessausrichtung zur Lotrichtung erreicht werden. Beispielsweise zum Vermessen flacher und ebener Oberflächen kann eine derartige Vorrichtung eingesetzt werden. Durch Ausrichtmittel, durch die die Vermessausrichtung gezielt relativ zum Fluggerät ausgelenkt und geschwenkt werden kann, kann beispielsweise bei schwer zugänglichen Stellen eines Messobjekts die Scannrichtung angepasst und ein Abtasten somit erleichtert werden. Hierbei kann weiters eine relative Ausrichtung des Abtastens und deren Änderung zum Fluggerät erfasst und bei der Bestimmung von Messpunktkoordinaten bzw. der 3D-Koordinaten berücksichtigt werden.

Insbesondere zum Steuern des Fluggeräts können Steuerbefehle am Fluggerät eingegeben und/oder durch eine für das Fluggerät vorgesehene Fernsteuerung an das Fluggerät übermittelt werden. Die Übermittlung kann dabei über ein Kabel zwischen Fluggerät und Referenzierungsanordnung und/oder Fernsteuerung erfolgen, wobei zudem eine Energieversorgung des Fluggeräts durch das Kabel erfolgen kann. Dadurch können beispielsweise eine Rotationsgeschwindigkeit von Rotoren am Fluggerät oder die Ausrichtung der Rotoren gesteuert und das Fluggerät somit gezielt bewegt werden. Weiter können auch Informationen zum Messobjekt eingegeben werden, womit eine automatische Steuerung des Fluggeräts unterstützt und/oder durchgeführt werden kann. Über ein Display am Fluggerät und/oder an der Fernsteuerung können, insbesondere während eines Abtastvorgangs, Informationen z.B. einem Benutzer bereitgestellt werden. Dabei können beispielsweise die vermessenen Punkte dargestellt und ein Messfortschritt verfolgt werden.

Gegenstand der Erfindung ist weiterhin ein auto-mobiles, unbemanntes, steuerbares Fluggerät, insbesondere Drohne, insbesondere wobei das Fluggerät schwebend ausrichtbar und bewegbar ist, zur Verwendung in einem erfindungsgemässen Vermessungssystem. Dabei sind Steuerungsdaten zur Steuerung des Fluggeräts relativ zu einem äussere Objektkoordinatensystem empfangbar und/oder die Steuerungsdaten zur Steuerung des Fluggeräts durch eine Verarbeitungseinheit aus empfangbaren Referenzierungsinformationen zur Bestimmung einer Flugausrichtung und einer Flugposition des Fluggeräts ableitbar, insbesondere wobei die Flugausrichtung durch eine dem Fluggerät zugeordnete Ausrichtungsbestimmungseinheit bestimmbar ist. Das Fluggerät trägt eine auf dem Triangulationsprinzip basierende optische Abtastvorrichtung zur, insbesondere punktweisen, optischen Abtastung von Messpunkten einer Objektoberfläche und zur Bestimmung von inneren Messpunktkoordinaten in einem inneren Abtastkoordinatensystem. Zudem ist die Verarbeitungseinheit derart konfiguriert, dass die inneren Messpunktkoordinaten im äusseren Objektkoordinatensystem referenzierbar sind, und eine Bestimmung von 3D-Koordinaten der Messpunkte im äusseren Objektkoordinatensystem aus den inneren Messpunktkoordinaten und aus der Referenzierung der inneren Messpunktkoordinaten durchführbar, sodass die inneren Messpunktkoordinaten als 3D-Koordinaten in dem äusseren Objektkoordinatensystem, insbesondere als Punktwolke, vorliegen. Zudem sind die Steuerungsdaten zur Steuerung des Fluggeräts derart konfiguriert, dass das Fluggerät unter Berücksichtigung von mittels der Abtastvorrichtung jeweils aktuell bestimmten inneren Messpunktkoordinaten und/oder unter Berücksichtigung von einer durch ein digitales Modell vordefinierten Objektoberfläche entlang einer durch das digitale Modell definierten Flugroute automatisch gesteuert relativ zur Objektoberfläche unter Einhaltung eines vordefinierten Messabstandsbereichs, insbesondere Messabstands, bewegt wird.

Im Rahmen der Erfindung können die Steuerungsdaten des erfindungsgemässen Fluggeräts ferner derart konfiguriert sein, dass das Fluggerät in Abhängigkeit der, insbesondere fortlaufend bestimmbaren, Vermessposition und Vermessausrichtung und/oder eines mittels der Abtastvorrichtung bestimmbaren Vermessabstands zur Objektoberfläche automatisch gesteuert relativ zur Objektoberfläche bewegbar und ausrichtbar ist. Weiters kann hierbei erfindungsgemäss die Abtastvorrichtung eine optische Scannvorrichtung, wobei bei der Bewegung des Fluggeräts Scannstreifen erzeugbar sind, und/oder ein Bild-Sequenzen verwendendes Messsysteme zur Bestimmung der Messpunktkoordinaten aufweisen, insbesondere wobei die Abtastvorrichtung einen Linienscanner, einen Streifenprojektionsscanner und/oder eine Kamera aufweist. Ausserdem kann die Ausrichtungsbestimmungseinheit eine Sensoreinheit aufweisen, insbesondere einen Neigungssensor, ein Magnetometer, einen Beschleunigungssensor, einen Drehratensensor und/oder einen Geschwindigkeitssensor und/oder das Fluggerät einen Abstandsmesssensor, insbesondere Radar, zur Abstandsmessung zu einem Gegenstand aufweisen.

Insbesondere kann das Fluggerät erfindungsgemäss zur definierten Ausrichtung, insbesondere selbsttätig parallelen Ausrichtung zur Lotrichtung, der Abtastvorrichtung eine kardanische Aufhängung und/oder Ausrichtmittel zur Ausrichtung der Abtastvorrichtung aufweisen, insbesondere wobei die Abtastvorrichtung in zwei, insbesondere in drei, Achsen schwenkbar ist. Ferner kann das erfindungsgemässe Fluggerät eine Eingabeeinheit, insbesondere Tastatur, berührungssensitives Display, Datenschnittstelle, zur Eingabe von Information und/oder Steuerbefehlen, insbesondere von Objektdaten, und/oder eine Ausgabeeinheit, insbesondere Display, zur Ausgabe von Information, insbesondere der erzeugten Punktwolke aufweisen und/oder eine Fernbedienung zur Steuerung des Fluggeräts, insbesondere wobei die Fernbedienung ein Display zur Darstellung von Information und/oder der erzeugten Punktwolke aufweist, aufweisen.

Das Fluggerät kann sich dadurch auszeichnen, dass es automatisch gesteuert eine Vermessung bzw. eine Abtastung eines Objekts durchführbar machen kann. Hierfür kann das Gerät z.B. mittels Rotoren und der Ausrichtung der Rotoren ausgerichtet und entlang einer Objektoberfläche bewegt werden. Ein Messabstand des Fluggeräts zur Objektoberfläche kann für die Steuerung kontinuierlich berücksichtigt werden, wobei dieser Abstand durch einen vom Fluggerät getragenen Scanner, der gleichzeitig die Oberflächenvermessung durchführen kann, bestimmbar ist. Die Steuerungsdaten zur Steuerung des Flugs können weiterhin Positions- und Ausrichtungsinformationen des Fluggeräts und des Messobjekts aufweisen und auf dieser Grundlage eine passende Ansteuerung der das Fluggerät bewegenden Mittel bewirken. So kann der Scanner fortlaufend relativ zu der Objektoberfläche, insbesondere im Wesentlichen senkrecht zu einer Scannrichtung, versetzt bzw. bewegt und die Oberfläche vom Scanner erfasst werden. Das Abtasten kann dabei punktweise erfolgen, d.h. die Oberfläche kann mit einer bestimmten Punktauflösung, insbesondere mit einer Auflösung von einem bis zu 100 Messpunkten pro vom Scanner erfassten Millimeter, und/oder einer zeitlichen Auflösung, insbesondere durch ein mehrmaliges Vermessen eines Messpunkts in einem bestimmten Zeitintervall, erfolgen. Hierfür kann beispielsweise das Fluggerät derart gesteuert werden, dass ein Teil der Objektoberfläche, insbesondere ein Scannstreifen, mehrmals überflogen und vermessen wird. Durch eine Referenzierung der aktuellen Position und Ausrichtung des Fluggeräts können die so gemessenen Punkte und bestimmten Koordinaten in ein übergeordnetes Koordinatensystem übertragen und das Objekt so zumindest teilweise, insbesondere vollständig, erfasst werden.

Als Abtastvorrichtung für ein derartiges Fluggerät können insbesondere Scanner, beispielsweise ein Linienscanner, der mittels Triangulation Punktvermessung realisiert, eingesetzt werden. Derartige Systeme können die Oberfläche zeilenweise erfassen und durch eine Eigenbewegung des System Flächen abscannen. Hierbei kann die Ausrichtung der Scanneinheit relativ zu einem zu vermessende Objekt, eingestellt und den Messbedingungen angepasst werden. An einem Fluggerät können dafür Ausrichtmittel vorgesehen sein, mittels denen eine Ausrichtung der Scanneinheit realisiert werden kann. Zur Bestimmung der Ausrichtung des Fluggeräts relativ zum Objekt, die Voraussetzung für eingezieltes Scannerausrichten ist, können weitere Sensoren, beispielsweise eine IMU, an dem Fluggerät vorgesehen sein.

Erfindungsgemäss kann ein unbemanntes, steuerbares, auto-mobiles Fluggerät zum Tragen einer auf dem Triangulationsprinzip basierenden optischen Abtastvorrichtung für ein Vermessungssystem zur Bestimmung von 3D-Koordinaten, insbesondere von einer Vielzahl von 3D-Koordinaten, von Messpunkten einer Objektoberfläche, insbesondere eines industriellen Erzeugnisses, in einem äusseren Objektkoordinatensystem verwendet werden.

Ein weiterer Gegenstand der Erfindung ist eine Computerprogrammprodukt, das auf einem maschinenlesbaren Träger gespeichert ist, oder Computer-Daten-Signal, verkörpert durch eine elektromagnetische Welle, mit Programmcode zur Durchführung eines erfindungsgemässen Verfahrens, insbesondere wenn das Programm in einer elektronischen Datenverarbeitungseinheit ausgeführt wird. Das Computerprogrammprodukt oder Computer-Daten-Signal kann derart gestaltet sein, dass darin Steuerungsanweisungen, insbesondere in Form von Algorithmen, vorgesehen sind, mit welchen ein erfindungsgemässes Verfahren zum Bestimmen von 3D-Koordinaten von Objektoberflächen mit einem automobilen, unbemannten, steuerbaren Fluggerät durchgeführt werden kann.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein Vermessungssystem nach dem Stand der Technik (siehe z.B. in EP 0 754 930 A2);
- Fig. 2: ein erfindungsgemässes Vermessungssystem mit einem Fluggerät und einer Vermessungsstation zur Bestimmung der Position und Ausrichtung des Fluggeräts;
- Fig. 3: eine weitere Ausführungsform eines erfindungsgemässen Vermessungssystems mit zwei Lasertrackern und einem Fluggerät;
- Fig. 4: eine weitere Ausführungsform eines erfindungsgemässen Vermessungssystems mit Pseudo-Satelliten und einem Fluggerät;
- Fig. 5: zwei Flugrouten für ein erfindungsgemässes Fluggerät.

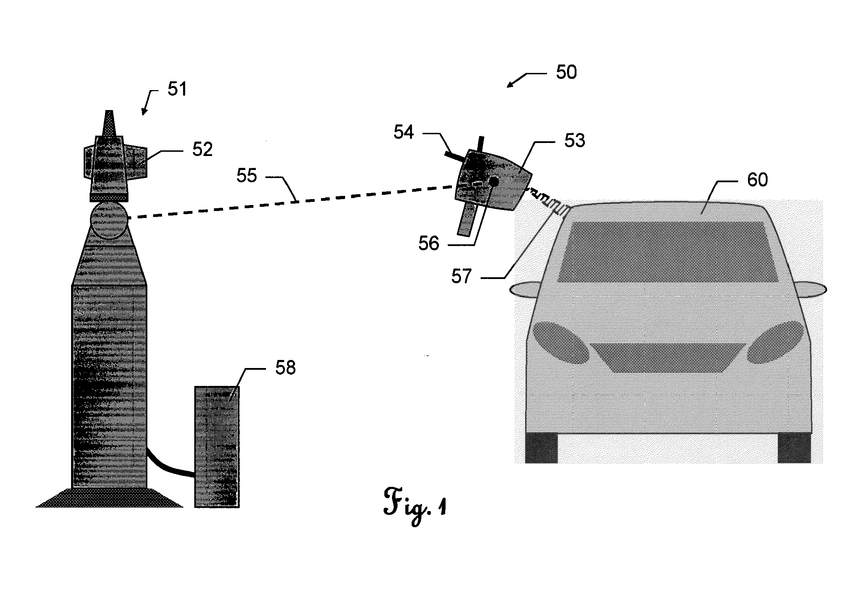

Figur 1 zeigt ein Vermessungssystem 50 zum Bestimmen von 3D-Koordinaten eines Objekts 60 nach dem Stand der Technik. Das Vermessungssystem 50 weist hierbei einen Lasertracker 51 mit einer Kamera 52 und eine mobile Scanneinheit 53 auf. An der Scanneinheit 53 sind weiters Markierungen 54 angebracht, die von der Kamera 52 erfasst und aus deren Lage und Anordnung mittels eines Bildverarbeitungsprozesses eine Ausrichtung der Scanneinheit 53 bestimmt werden kann. Zusätzlich wird vom Lasertracker 51 ein Messstrahl 55 emittiert und mit dem Strahl 55 ein Reflektor 56 an der Scanneinheit 53 angezielt. Dadurch kann die Position der Scanneinheit 53 relativ zum Objekt 60 und relativ zum Lasertracker 51 bestimmt werden. Am Scanner 53 wird zudem ein Scannstrahl 57 emittiert, mit dem die Objektoberfläche abgetastet und lokale Messkoordinaten der jeweiligen Position der Oberfläche bestimmt werden. Durch diese Anordnung können die so vermessenen Messpunkte am Objekt 60 mittels des Lasertrackers 51 in einem Objektkoordinatensystem referenziert und globale 3D-Koordinaten des Objekts 60 erzeugt werden. Für die Zusammenführung der Messkoordinaten und der bestimmten aktuellen Position und Ausrichtung der Scanneinheit 53, insbesondere unter Berücksichtigung einer bekannten Relativposition und -ausrichtung von Lasertracker 53 zu Objekt 60, ist einer Auswerteeinheit 58 vorgesehen. Derartige Vermessungssysteme 50 werden beispielsweise in der industriellen Produktion bei der Vermessung von z.B. Flugzeugen oder Automobilen eingesetzt und können produktionsbegleitend eine Qualitätskontrolle von Werkstücken ermöglichen.

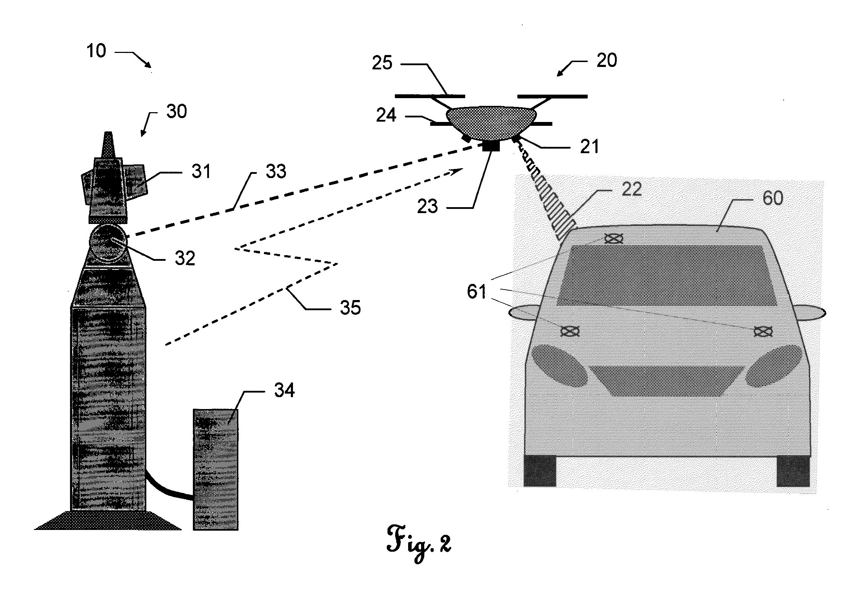

In Figur 2 wird eine Ausführungsform eines erfindungsgemässen Vermessungssystems 10 gezeigt. Eine Referenzierungsanordnung verkörpert durch einen Lasertracker 30 weist hierbei eine Erfassungseinheit 31, beispielsweise eine Videokamera, eine Anzieleinheit 32 zur Emission eines Messstrahls 33 und eine Auswerteeinheit 34 auf. Ferner können Signale 35 an ein Fluggerät 20 übermittelt werden. Das Fluggerät trägt eine Abtastvorrichtung 21, verkörpert durch einen Scanner, der Strahlung 22 zum Scannen bzw. Abtasten in Richtung des zu vermessenden Objekts 60 emittiert. Zusätzlich sind an dem Fluggerät 20 ein Reflektor 23 zur Reflexion des von dem Lasertracker 30 emittierten Messstrahls 35 und Markierungen 24, insbesondere Leuchtdioden, in einer definierten Lage und Anordnung angeordnet. Ausserdem verfügt das Fluggerät 20 über mindestens zwei, insbesondere vier, Rotoren 25 (perspektivisch gezeigt), die eine fliegende Bewegung des Fluggeräts 20 ermöglichen.

Zur Vermessung des Objekts 60 können Referenzpunkte 61, deren Positionen am Objekt 60 aus CAD-Daten bekannt sind, angezielt und damit der Lasertracker 30 in ein Objektkoordinatensystem eingemessen werden. Das Fluggerät 20 kann entsprechend der Objektoberfläche am Objekt 60 entlang bewegt werden, wobei der Scanner mittels der Scannstrahlung 22 während des Bewegens Messpunkte an der Objektoberfläche abtastet. Dabei können scannerseitig lokale Messpunktkoordinaten der jeweiligen Oberflächenpunkte bestimmt werden.

Zum Erfassen bzw. Vermessen des globalen Oberflächenverlaufs kann nun eine Referenzierung der lokalen Koordinaten in dem Objektkoordinatensystem erfolgen. Dafür wird zum einen die Ausrichtung des Fluggeräts 20 mittels eines Erfassens der Markierungen 24 durch die Erfassungseinheit 31 und eines Auswertens eines dadurch erzeugten Bildes mit den Markierungen 24, z.B. mittels Bildverarbeitung, bestimmt. Eine exakte Ausrichtungsbestimmung kann dabei durch die definierte Anordnung der Markierungen 24 am Fluggerät 20 und deren Lage im Bild erfolgen. Zusätzlich wird zum anderen die Position des Fluggeräts 20 bestimmt durch ein Anzielen des Reflektors 23 mit dem aus der Anzieleinheit 32 des Lasertrackers 30 emittierten Messstrahls 33. Der Strahl 33 wird reflektiert und seitens des Lasertrackers 30 erfasst und beispielsweise aus der Laufzeit eines Messlaserpulses und einer bestimmbaren Ausrichtung der Anzieleinheit 32 eine genaue Position des Fluggeräts 20 relativ zum Lasertracker 30 bestimmt. mit dieser Information können so die 3D-Objektkoordinaten, insbesondere mittels der Auswerteeinheit 34, abgeleitet und als Punktwolke dargestellt und in ein CAD-Modell überführt werden. Dabei können gleichzeitig eine allfällige Abweichung von den bestimmten Koordinaten von in den CAD-Daten vorliegenden Sollkoordinaten bestimmt und beispielsweise farblich graphisch auf einem Display dargestellt werden. Überdies kann das Fluggerät mittels der vom Lasertracker 30 zum Fluggerät gesendeten Signale 35 gesteuert werden, wobei für die Steuerung ein Abstand, eine Position und eine Ausrichtung des Fluggeräts 30 relativ zum Objekt 60 berücksichtigt werden können.

Vor einer Vermessung mit dem Vermessungssystem 10 kann ein Benutzer anhand einer entsprechenden Software auf Basis eines CAD-Modells einen zu vermessenden Bereich des Objekts 60, z.B. das Dach eines Fahrzeugs, definieren. Die räumliche Relation des CAD-Modells zum Lasertracker 30 kann dann durch Einmessen von mindestends drei definierten Referenzpunkten 61 am Fahrzeug, welche im CAD-Modell koordinativ vorgegeben sind, bestimmt werden. Nach der Auswahl des Objektteils kann eine optimale Flugroute berechnet werden. Dabei wird ein optimaler Abstand des Scanners 21 von z.B. 40 cm ebenso berücksichtigt, wie ein Überlappungsbereich von durch das Scannen entstehender Scannstreifen von z.B. 20%.

Sobald der Vermessvorgang vom Benutzer gestartet wird, können die aktuelle Position und Ausrichtung des Fluggeräts 20 vom Lasertracker 30 erfasst und an die Auswerteeinheit 34 übermittelt werden. Erfasste Werte können mit Soll-Werten aus der berechneten Flugroute abgeglichen und daraus Signale 35 abgeleitet werden, welche mittels Funk an das Fluggerät 20 übertragen werden können. Somit kann die Position und Ausrichtung des Fluggeräts 20 fortlaufend korrigiert und an die bestimmte Flugroute angepasst werden.

Sobald das Fluggerät 20 das zu erfassenden Objekt 60 erreicht hat, kann der Scanner 21 mit der Abtastung der Oberflächenpunkte beginnen. Die Messpunktkoordinaten können ebenfalls über Funk an die Auswerteeinheit 34 übermittelt werden, wo sie gemeinsam mit der erfassten Position und Ausrichtung des Fluggeräts 20 verarbeitet und gespeichert werden können.

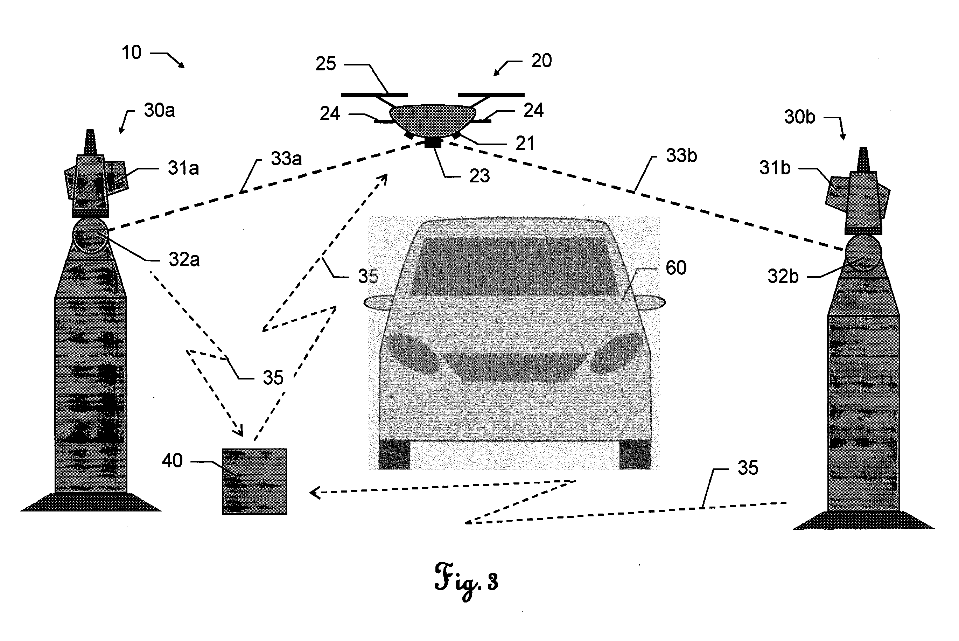

Figur 3 zeigt eine weitere Ausführungsform eines erfindungsgemässen Vermessungssystems 10. Für die Referenzierung, d.h. für die Bestimmung der sechs Freiheitsgrade, d.h. von Position und Ausrichtung, des Fluggeräts 20, sind in dieser Ausführung zwei Lasertracker 30a,30b mit jeweils einer Kamera 31a,31b und einer einen Messstrahl 33a,33b emittierenden Anzieleinheit 32a,32b vorgesehen. Seitens des Fluggeräts 20 sind wiederum Mittel zur Interaktion mit der Referenzierungsanordnung bzw. den beiden Lasertrackern 30a,30b vorgesehen, wobei die Markierungen 24 eine Ausrichtung und der Reflektor 23 eine Position angeben. Das Scannen des Objekts 60 erfolgt mittels des Scanners 21. Ferner ist eine Steuereinheit 40 vorgesehen, durch die die Steuerung des Fluggeräts 20 erfolgen kann. Hierfür kann die Steuereinheit 40 Signale 35 von den Lasertrackern 30a,30b, welche eine jeweils aktuelle Position und Ausrichtung des Fluggeräts aufweisen können, empfangen und Signale 35 aussenden, die vom Fluggerät 20 empfangen werden können. Die ausgesendeten Signale 35 können dabei Steuerungsdaten repräsentieren, die unter Berücksichtigung einer Referenzierungsinformation, d.h. unter Berücksichtigung von Position und Ausrichtung des Scanners 21, erzeugt wurden und bei Kenntnis der Objektoberfläche ein Entlangsteuern des Fluggeräts 20 am Objekt 60 durchführbar machen.

Des Weiteren kann die Steuereinheit 40 in Abhängigkeit vorliegender CAD-Daten, beispielsweise eines digitalen Oberflächenmodells des Objekts 60, eine Steuerung des Fluggeräts 20 derart ausführen, dass das Fluggerät 20 entlang einer definierten Route z.B. im Wesentlichen parallel zum Oberflächenverlauf versetzt wird und dabei zusätzlich der durch den Scanner 21 ermittelbare Abstand zur Objektoberfläche berücksichtigt wird.

Ferner kann bei dieser Ausführungsform die Steuerung des Fluggeräts 20 redundant gestaltet werden. Entsteht beispielsweise eine Sichtbehinderung zwischen einem der Lasertracker 30a,30b und dem Fluggerät 20, so kann die Positions- und Ausrichtungsbestimmung durch den zweiten Tracker 30a,30b weiterhin erfolgen und das Fluggeräts 20 gesteuert werden. Hierfür kann die Verfolgung bzw. das Anmessen des Fluggeräts 20 - sobald eine Sichtbehinderung festgestellt wird, d.h. sobald der Tracker 30a,30b die Markierung 24 und/oder den Reflektor 23 am Fluggerät 20 nicht länger erfassen kann - von einem zum anderen Lasertracker 30a,30b übergeben werden und dadurch der Betrieb des Vermessungssystems 10 auch bei einer Unterbrechung der Sichtverbindung gewährleistet werden.

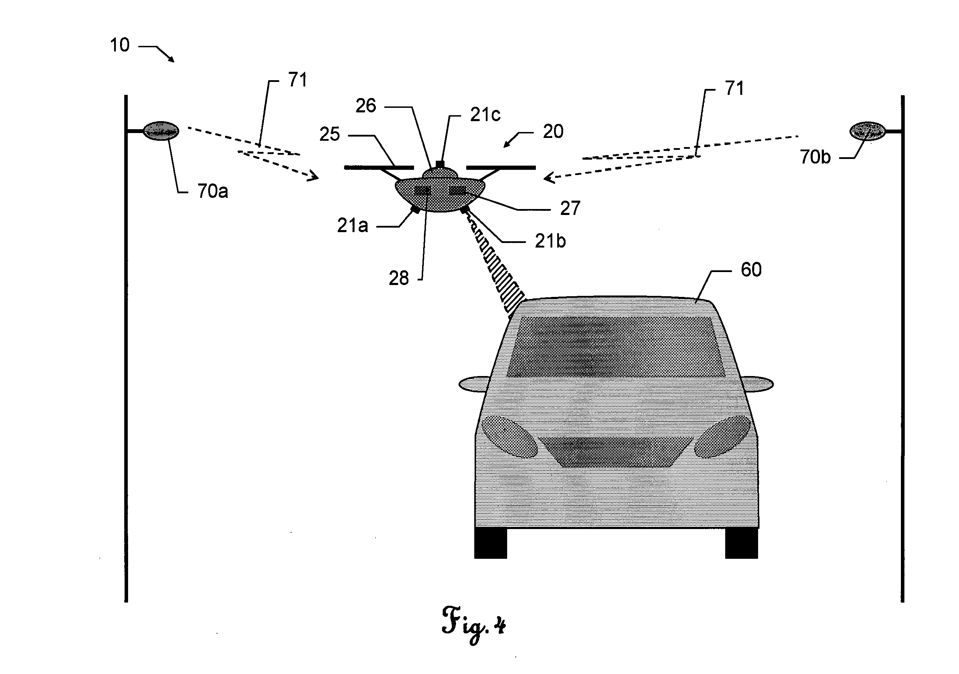

Figur 4 zeigt eine weitere Ausführungsform des erfindungsgemässen Vermessungssystems 10 mit einem als Referenzierungsanordnung ausgestalteten Indoor-Positionierungssystem, beispielsweise für eine Vermessung in einer Produktionshalle, für das Fluggerät 20 mit im Raum verteilten Pseudo-Satelliten 70a,70b, so genannten "Pseudoliten", wobei hier beispielhaft die beiden Pseudo-Satelliten 70a,70b gezeigt sind, zur Referenzierung jedoch weitere "Pseudoliten" vorgesehen sein können. Beispielsweise kann aus den Signalen von vier solchen Pseudo-Satelliten die Position des Fluggeräts 20 eindeutig bestimmbar sein. Insbesondere kann zur exakten Positionsbestimmung der Empfang von Signalen aus drei Pseudo-Satelliten ausreichend sein, falls die Signale eine gemeinsame Zeitbasis aufweisen. Das Fluggerät 20 bzw. die Drohne weist ferner drei (schräg nach unten bzw. nach oben) ausgerichtete Abtastvorrichtungen 21a,21b,21c, beispielsweise Triangulationsscanner, und eine Empfangseinheit 26, die die Positionsbestimmung mittels einem von den Pseudo-Satelliten 70a,70b ausgesendeten Signals 71 ermöglicht, auf. Die Signale 71 können dabei eine Positionsinformation repräsentieren mittels derer - im Wesentlichen in Analogie zu einem GNSS-System - eine relative Positionsbestimmung bei Empfang von mehreren Signalen 71 möglich ist. Zudem kann eine Sensoreinheit 27 bestehend aus einer Inertial Measurement Unit (IMU) - bestehend aus drei Beschleunigungssensoren und drei Drehratensensoren - und einem 3-Achs-Magnetometer in das Fluggerät 20 integriert sein. Mittels dieser Sensoreinheit 27 kann die Position und die Ausrichtung des Fluggeräts 20 in Relation zu einem übergeordneten Objektkoordinatensystem bestimmt werden und somit eine Referenzierung eines lokalen Koordinatensystems des jeweiligen Scanners 21a,21b,21c mit dem Objektkoordinatensystem erfolgen. Zudem kann in dem Fluggerät 20 eine Verarbeitungs- bzw. Recheneinheit 28 vorhanden sein.

Ein Benutzer kann anhand eines CAD-Modells die zu vermessenden Bereiche des Objekts 60 an einem Bürorechner definieren. Entsprechend der Objektkoordinaten und den zu optimierenden Kriterien kann so eine Flugroute berechnet werden, welche z.B. über eine Kabelverbindung oder mittels Funk an die Recheneinheit 28 des Fluggeräts 20 übermittelt und dort gespeichert werden kann.

Sobald der Vorgang vom Benutzer gestartet wird, kann die aktuelle Position und Ausrichtung durch die Empfangseinheit 26 und die Sensoreinheit 27 bestimmt und an die Recheneinheit 28 übermittelt werden. Die erfassten Positions- und Ausrichtungswerte können mit den Soll-Werten einer berechneten Flugroute abgeglichen und daraus Steuersignale für die Rotoren 25 des Fluggeräts 20 abgeleitet werden. Durch diese kann die Lage des Fluggeräts 20 an die Flugroute angepasst werden.

Bei einem Erreichen eines Sollabstands bzw. eines Sollbereichs für die Oberflächenvermessung kann der dem Objekt 60 zugewandte Scanner 21b mit der Bestimmung der Koordinaten der Oberflächenpunkte beginnen. Diese können gemeinsam mit den Referenzierungsinformationen, d.h. den erfassten Werten für die Position und Ausrichtung des Fluggeräts 20, in einem Speicher abgelegt werden. Nach erfolgter Durchführung der Vermessung und/oder während der Vermessung können die Messwerte bzw. Messkoordinaten von dem Fluggerät 20 über eine Kabelverbindung oder mittels Funk an einen Rechner und/oder eine Auswerteeinheit übermittelt werden. Dort kann eine Transformation der lokalen Koordinaten in Abhängigkeit der Referenzinformation zu den jeweiligen Koordinaten in ein CAD-System erfolgen und ein Vergleich des Ist-Zustandes mit dem Soll-Zustand des Objekts 60 durchgeführt werden.

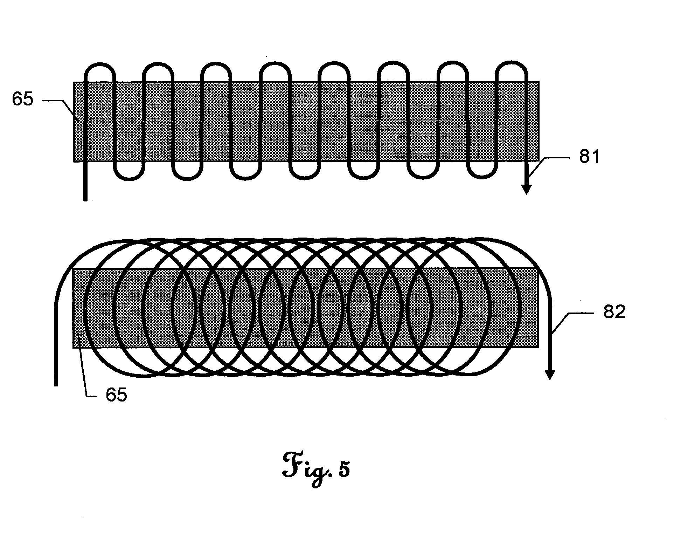

Figur 5 zeigt zwei optimierte Flugrouten 81,82 entlang derer das Fluggerät 20 zur Vermessung einer Objektoberfläche 65 bewegt werden kann. Während mit der Flugroute 81 ein möglicher kurzer Flugweg für das Fluggerät 20 erreicht werden soll um die Oberfläche 65 vollständig zu vermessen und damit eine möglichst kurze Messzeit zu erreichen, wird mit der Route 82 eine Strecke definiert, bei der enge Kurvenradien vermieden werden können. Gleichzeitig kann bei einem Abfliegen der Route 82 ein höhere Messgenauigkeit erreicht werden, da durch den Verlauf der Route 82 zumindest Teilbereiche der Oberfläche 65 mehrfach überflogen und somit vermessen werden können. Beide Flugrouten 81,82 können auf Grundlage eines Oberflächenmodells eines zu vermessenden Objekts bestimmt und je nach Messanforderung optimiert werden. Überdies kann wie oben beschrieben eine Korrektur bzw. Anpassung der jeweiligen Flugroute 81,82 in Abhängigkeit eines, insbesondere fortlaufend, bestimmten Messabstands zwischen Fluggerät 20 und Objektoberfläche 65 und/oder in Abhängigkeit von während der Flugbewegung erfassten Hindernissen erfolgen.

## Patentansprüche

1. Vermessungssystem (10) zur Bestimmung von 3D-Koordinaten, insbesondere von einer Vielzahl von 3D-Koordinaten, von Messpunkten einer Objektoberfläche (65), insbesondere eines industriellen Erzeugnisses, in einem äusseren Objektkoordinatensystem mit
• einer auf dem Triangulationsprinzip basierenden optischen Abtastvorrichtung (21,21a,21b,21c) zur, insbesondere punktweisen, optischen Vermessung der Messpunkte der Objektoberfläche (65) und zur Bestimmung von inneren Messpunktkoordinaten in einem inneren Abtastkoordinatensystem,
• einer Referenzierungsanordnung (30,30a,30b,70a,70b) zur Erzeugung von Referenzierungsinformationen zur Referenzierung der inneren Messpunktkoordinaten in dem äusseren Objektkoordinatensystem und
• einer Auswerteeinheit (34) zur Bestimmung der 3D-Koordinaten der Messpunkte im äusseren Objektkoordinatensystem in Abhängigkeit der inneren Messpunktkoordinaten und der Referenzierungsinformationen, sodass die inneren Messpunktkoordinaten als 3D-Koordinaten in dem äusseren Objektkoordinatensystem, insbesondere als Punktwolke, vorliegen,
**gekennzeichnet durch**
• ein die Abtastvorrichtung (21,21a,21b,21c) tragendes unbemanntes, steuerbares, auto-mobiles Fluggerät (20), insbesondere wobei das Fluggerät (20) derart ausgebildet ist, dass das Fluggerät (20) schwebend ausrichtbar und bewegbar ist, und
• eine derart konfigurierte Steuereinheit (40), dass das Fluggerät (20)
□ unter Berücksichtigung von mittels der Abtastvorrichtung (21,21a,21b,21c) jeweils aktuell bestimmten inneren Messpunktkoordinaten und/oder
□ unter Berücksichtigung von einer **durch** ein digitales Modell vordefinierten objektoberfläche entlang einer **durch** das digitale Modell definierten Flugroute (81,82)
automatisch gesteuert relativ zur Objektoberfläche (65) unter Einhaltung eines vordefinierten Messabstandsbereichs, insbesondere Messabstands, bewegt wird.

2. Vermessungssystem (10) nach Anspruch 1,
**dadurch gekennzeichnet, dass**
die Steuereinheit (40) derart konfiguriert ist, dass das Fluggerät (20) in Abhängigkeit einer mittels der Referenzierungsanordnung (30,30a,30b,70a,70b) bestimmbaren, insbesondere fortlaufend bestimmbaren, Vermessposition und Vermessausrichtung der Abtastvorrichtung (21,21a,21b,21c) und/oder eines mittels der Abtastvorrichtung (21,21a,21b,21c) bestimmbaren Vermessabstands zur Objektoberfläche (65) automatisch gesteuert relativ zur Objektoberfläche (65)bewegbar und ausrichtbar ist,
und/oder
eine Position und/oder ein Sollverlauf der Objektoberfläche (65) vordefinierbar, insbesondere durch das digitale Modell, insbesondere CAD-Modell, vorgebbar, ist, insbesondere wobei auf Basis der vordefinierten Objektoberfläche (65) jeweilige Oberflächensollkoordinaten mit den jeweiligen 3D-Koordinaten vergleichbar sind und insbesondere wobei die Referenzierungsanordnung (30,30a,30b,70a,70b) durch eine Referenzierung vordefinierter Referenzpunkte (61) zur Objektoberfläche (65) referenzierbar ist, und/oder die Abtastvorrichtung (21,21a,21b,21c) eine optische Scannvorrichtung, wobei bei der Bewegung des Fluggeräts (20) Scannstreifen erzeugbar sind, und/oder ein Bild-Sequenzen verwendendes Messsystems zur Bestimmung der Messpunktkoordinaten aufweist, insbesondere wobei die
Abtastvorrichtung (21,21a,21b,21c) einen Linienscanner, einen Streifenprojektionsscanner und/oder eine Kamera aufweist.

3. Vermessungssystem (10) nach Anspruch 2,
**dadurch gekenntzeichnet**, dass
die Flugroute (81,82) in Abhängigkeit der Oberflächenposition und des Oberflächensollverlaufs, insbesondere automatisch, bestimmbar ist, insbesondere wobei
die Flugroute (81,82) und/oder eine Fluggeschwindigkeit, hinsichtlich eines Scannwegs, einer Scannzeit, einer Scanngenauigkeit, einer Bewegungsstabilität des Fluggeräts (20), einer Positions- und Ausrichtungsbestimmung des Fluggeräts (20) und/oder einer Kollisionsvermeidung,
insbesondere wobei ein Abstand mittels Abstandsmesssensor zu einem Gegenstand, insbesondere zu einem Hindernis, bestimmbar ist, optimierbar sind, insbesondere wobei die Scannstreifen in Abhängigkeit der Flugroute (81,82) zumindest teilweise überlappbar sind, wodurch
• die Scanngenauigkeit, der Scannweg und die Scannzeit einstellbar sind und/oder
• die Bewegung und Ausrichtung des Fluggeräts (20) und/oder der Abtastvorrichtung (21,21a,21b,21c) mittels einer Analyse eines Überlappungsbereichs der Scannstreifen, insbesondere durch Bildverarbeitung, bestimmbar und/oder justierbar sind.

4. Vermessungssystem (10) nach einem der Ansprüche 2 oder 3,
**dadurch gekennzeichnet, dass**
die Referenzierungsanordnung (30,30a,30b,70a,70b) aufweist
• eine Positionsbestimmungsanordnung, die derart ausgestaltet ist, dass die äussere Vermessposition der Abtastvorrichtung (21,21a,21b,21c) in Bezug zum Objektkoordinatensystem bestimmbar ist, und/oder
• eine Ausrichtungsbestimmungsanordnung, die derart ausgestaltet ist, dass die Vermessausrichtung der Abtastvorrichtung (21,21a,21b,21c) in Bezug zum Objektkoordinatensystem bestimmbar ist, insbesondere wobei
die Vermessposition und die Vermessausrichtung der Abtastvorrichtung (21,21a,21b,21c) durch ein bekanntes Positionsverhältnis und Ausrichtungsverhältnis vom Fluggerät (20) zur Abtastvorrichtung (21,21a,21b,21c) bestimmbar ist, insbesondere wobei eine Fluggerätposition und eine Fluggerätausrichtung durch die Referenzierungsanordnung (30,30a,30b,70a,70b) bestimmbar sind.

5. Vermessungssystem (10) nach einem der Ansprüche 1 bis 4,
**dadurch gekennzeichnete dass**
• die Abtastvorrichtung (21,21a,21b,21c) und/oder das Fluggerät (20) einen Reflektor (23) aufweist,
• die Referenzierungsanordnung (30,30a,30b,70a,70b) ein geodätisches Vermessungsgerät, insbesondere Totalstation oder Lasertracker (30,30a,30b), aufweist mit mindestens
□ einer Strahlungsquelle zur Erzeugung eines optischen Messstrahls (33,33a,33b) zur Entfernungsmessung,
□ einer eine Stehachse definierenden Basis,
□ einer Strahllenkeinheit (32,32a,32c) zur Emission des Messstrahls (33,33a,33b) und zum Empfang von zumindest einem Teil des am Reflektor (23) reflektierten Messstrahls, wobei die Strahllenkeinheit (32,32a,32c) zur Ausrichtung einer optischen Zielachse um die Stehachse und eine im Wesentlichen orthogonal zur Stehachse stehende Neigungsachse relativ zur Basis motorisiert schwenkbar ist,
□ Winkelmessfunktionalität zur hochpräzisen Erfassung der Ausrichtung der Zielachse, und
□ Auswertemitteln zur Datenspeicherung und Steuerung der Ausrichtung der Strahllenkeinheit (32,32a,32b), und
• der Messstrahl (33,33a,33b) auf den Reflektor (23), insbesondere fortlaufend, ausrichtbar ist, sodass die Vermessposition der
Abtastvorrichtung (21,21a,21b,21c) und/oder eine Fluggerätposition bestimmbar ist,
insbesondere wobei
• ein zu der Abtastvorrichtung (21,21a,21b,21c) und/oder zu dem Fluggerät (20) übermittelbares Signal (35) aufweist
□ eine Positionsinformation, wobei die Positionsinformation in einer ersten dem Fluggerät (20) zugeordneten Verarbeitungseinheit in Steuerungsdaten zur Steuerung des Fluggeräts (20) umsetzbar ist, oder
□ sie Steuerungsdaten zur Steuerung des Fluggeräts (20), wobei die Steuerungsdaten mittels einer zweiten der Referenzierungsanordnung (30,30a,30b,70a,70b) zugeordneten Verarbeitungseinheit aus der Positionsinformation ermittelbar sind,
und/oder
• die Referenzierungsanordnung (30,30a,30b,70a,70b) mindestens einen GNSS-Satelliten aufweist, insbesondere repräsentiert durch GPS, GLONASS oder Galileo, wobei der GNSS-Satellit GNSS-Signale bereitstellt, und
• die Abtastvorrichtung (21,21a,21b,21c) und/oder das Fluggerät eine Empfangseinheit (26), insbesondere eine GNSS-Antenne, aufweisen, sodass die GNSS-Signale empfangbar und die Vermessposition der Abtastvorrichtung (21,21a,21b,21c) aus den empfangenen GNSS-Signalen bestimmbar sind, insbesondere wobei
• die Referenzierungsanordnung (30,30a,30b,70a,70b) ein Pseudo-Satelliten-Modul (70a,70b) zur Aussendung von Positionierungssignalen (71) aufweist und
• die Empfangseinheit (26) der Abtastvorrichtung (21,21a,21b,21c) und/oder des Fluggeräts (20) derart ausgebildet ist, dass die Positionierungssignale (71) empfangbar und die Vermessposition und/oder die Vermessausrichtung der Abtastvorrichtung (21,21a,21b,21c) aus den empfangenen Positionierungesignalen (71) bestimmbar sind.

6. Vermessungssystem nach einem der Ansprüche 1 bis 5, **dadurch gekennzeichnete dass**
die Referenzierungsanordnung (30,30a,30b,70a,70b)
• eine der Abtastvorrichtung (21,21a,21b,21c) und/oder dem Fluggerät (20) zugeordnete Sensoreinheit (27) zur Bestimmung der Vermessausrichtung und/oder der Vermessposition der Abtastvorrichtung (21,21a,21b,21c) aufweist, insbesondere einen Neigungssensor, ein Magnetometer, einen Beschleunigungssensor, einen Drehratensensor und/oder ein Geschwindigkeitssensor,
und/oder
• die Abtastvorrichtung (21,21a,21b,21c) und/oder das Fluggerät (20) eine die Vermessausrichtung angebende Markierung (24) aufweist, insbesondere ein definiertes Muster, ein Pseudo-Random-Pattern, einen Barcode und/oder eine Leuchtdiode, und
• die Referenzierungsanordnung (30,30a,30b,70a,70b) eine Erfassungseinheit (31,31a,31b) aufweist, insbesondere Kamera, zur Erfassung der Markierung (24) und zur Bestimmung der Vermessausrichtung der Abtastvorrichtung (21,21a,21b,21c) aus der Lage und Anordnung der Markierung (24),
und/oder
die Referenzierungsanordnung (30,30a,30b,70a,70b) eine Entfernungs-Bilderfassungseinheit aufweist, insbesondere RIM-Kamera, zur Erfassung eines Bildes des Fluggeräts (20), wobei eine Kontur und/oder bild-punktabhängige Abstandsdaten zum Fluggerät (20) aus dem Bild ableitbar sind und daraus die Vermessausrichtung und/oder die Vermessposition bestimmbar sind und/oder
das Fluggerät (20) eine Umgebungserfassungseinheit, insbesondere eine Kamera, zur Erfassung einer in einer Messumgebung angeordneten Positionsmarkierung aufweist,
insbesondere eines definierten Musters oder eines Pseudo-Random-Patterns, wobei aus einer Lage und Orientierung der auf einem Bild erfassten Positionsmarkierung die Bestimmung der Vermessausrichtung und/oder der Vermessposition durchführbar ist.

7. Verfahren zum Bestimmen von 3D-Koordinaten, insbesondere von einer Vielzahl von 3D-Koordinaten, von Messpunkten einer Objektoberfläche (65), insbesondere eines industriellen Erzeugnisses, in einem äusseren Objektkoordinatensystem mit
• einem, insbesondere punktweisen, räumlich versetzbaren, lokalen, auf dem Triangulationsprinzip basierenden, optischen Abtasten der Messpunkte der Objektoberfläche (65) und Bestimmen von lokalen Messpunktkoordinaten in einem inneren Abtastkoordinatensystem,
• einem Erzeugen von Referenzierungsinformationen, insbesondere einer äusseren Vermessposition und Vermessausrichtung, zum Referenzieren der lokalen Messpunktkoordinaten in dem äusseren Objektkoordinatensystem und
• einem Bestimmen der 3D-Koordinaten der Messpunkte im äusseren Objektkoordinatensystem in Abhängigkeit der lokalen Messpunktkoordinaten und der Referenzierungsinformationen, sodass die lokalen Messpunktkoordinaten als 3D-Koordinaten in dem äusseren Objektkoordinatensystem, insbesondere als Punktwolke, vorliegen,
**dadurch gekennzeichnet, dass**
• ein Versetzen des lokalen Abtastens durch eine unbemanntes, steuerbares, auto-mobiles Fluggerät (20) erfolgt, insbesondere wobei das Fluggerät (20) schwebend ausgerichtet und bewegt wird, und
• das Fluggerät (20)
□ unter Berücksichtigung von jeweils aktuell bestimmten inneren Messpunktkoordinaten und/oder
□ unter Berücksichtigung von einer durch ein digitales Modell vordefinierten Objektoberfläche entlang einer durch das digitale Modell definierten Flugroute (81,82)
automatisch gesteuert relativ zur Objektoberfläche (65) unter Einhaltung eines vordefinierten Messabstandsbereichs, insbesondere Messabstands, bewegt wird.

8. Verfahren zum Bestimmen von 3D-Koordinaten nach Anspruch 7
**dadurch gekennzeichnet, dass**
das Fluggerät (20) in Abhängigkeit der, insbesondere fortlaufend bestimmten, äusseren Vermessposition und äusseren Vermessausrichtung und eines Vermessabstands zur Objektoberfläche (65) automatisch gesteuert relativ zur Objektoberfläche (65) bewegt und ausgerichtet wird,
und/oder
eine Position und/oder ein Sollverlauf der Objektoberfläche (65) vordefiniert wird, insbesondere durch ein digitales Modell, insbesondere CAD-Modell, vorgegeben wird, insbesondere wobei auf Basis der vordefinierten Objektoberfläche (65) jeweilige Oberflächensollkoordinaten mit den jeweiligen 3D-Koordinaten verglichen werden und insbesondere wobei die Referenzierungsanordnung (30,30a,30b,70a,70b) durch ein Referenzieren vordefinierter Referenzpunkte (61) zur Objektoberfläche (65) referenziert wird, und/oder
das Abtasten der Messpunkte optisch scannend, insbesondere mit einer
Scannvorrichtung (21,21a,21b,21c), wobei Scannstreifen erzeugt werden, und/oder optisch mit einem Bild-Sequenzen verwendenden Messsystem zum Bestimmen der Messpunktkoordinaten erfolgt.

9. Verfahren zum Bestimmen von 3D-Koordinaten nach Anspruch 8
**dadurch gekennzeichnet, dass**
die Flugroute (81,82) in Abhängigkeit der Oberflächenposition und des Oberflächenverlaufs, insbesondere automatisch, bestimmt wird, insbesondere wobei
die Flugroute (81,82) und/oder eine Fluggeschwindigkeit, hinsichtlich eines Scannwegs,
einer Scannzeit, einer Scanngenauigkeit, einer Bewegungsstabilität des Fluggeräts (20), einer Position- und Ausrichtungsbestimmung des Fluggeräts (20) und/oder einer Kollisionsvermeidung, insbesondere wobei ein Abstand zu einem Gegenstand, insbesondere zu einem Hindernis, bestimmt wird, optimiert wird,
insbesondere wobei die Scannstreifen in Abhängigkeit der Flugroute (81,82) zumindest teilweise überlappt werden, wodurch
• die Scanngenauigkeit, der Scannweg und die Scannzeit eingestellt wird und/oder,
• die Bewegung und Ausrichtung des Fluggeräts (20) und/oder der Vermessausrichtung mittels einer Analyse eines Überlappbereichs der Scannstreifen, insbesondere durch Bildverarbeiten, bestimmt und/oder justiert werden.

10. Verfahren zum Bestimmen von 3D-Koordinaten nach einem der Ansprüche 8 oder 9
**dadurch gekennzeichnet, dass**
im Rahmen des Verfahrens Positionierungssignale (71), insbesondere von Pseudo-Satelliten (70a,70b) bereitgestellte Signale und/oder GNSS-Signale, empfangen werden, insbesondere wobei die GNSS-Signale repräsentiert werden durch GPS-, GLONASS- oder Galileo-Signale, und die äussere Vermessposition aus den empfangenen Positionierungssignalen (71) bestimmt wird,
und/oder
das Bestimmen der äusseren Vermessposition mittels eines, insbesondere am Fluggerät (20), reflektierten Messstrahls (33,33a,33b) erfolgt,
und/oder
das Bestimmen der Vermessausrichtung in Nick-, Roll- und Gierrichtung erfolgt, insbesondere wobei das Bestimmen mittels einer internen, dem Fluggerät (20) zugeordneten Sensoreinheit (27), insbesondere mittels Neigungssensor, Magnetometer, Beschleunigungssensor, Drehratensensor und/oder Geschwindigkeitssensor erfolgt und/oder
das Bestimmen der Vermessausrichtung mittels Zusammenwirken
• einer dem Fluggerät (20) zugeordneten, die Vermessausrichtung angebenden Markierung (24), insbesondere eines definierten Musters, eines Pseudo-Random-Patterns, eines Barcodes und/oder einer Leuchtdiode, und
• einem Erfassen, insbesondere mittels Kamera, der Markierung (24) zum Bestimmen der Vermessausrichtung aus einer Lage und Anordnung der Markierung (24) erfolgt.

11. Verfahren zum Bestimmen von 3D-Koordinaten nach einem der Ansprüche 8 bis 10
**dadurch gekennzeichnet, dass**
die Vermessausrichtung parallel, insbesondere selbsttätig, zur Lotrichtung und/oder definiert relative zur Fluggerätausrichtung ausgerichtet wird, insbesondere durch eine kardanische Aufhängung und/oder durch Ausrichtmittel zum definierten Ausrichten der Vermessausrichtung, insbesondere wobei ein Schwenken in zwei, insbesondere in drei, Achsen erfolgt,
und/oder
Informationen und/oder Steuerbefehle, insbesondere Objektdaten, in das Fluggerät (20) eingegeben werden, und/oder Informationen, insbesondere die erzeugte Punktwolke, insbesondere auf einem Display, ausgegeben werden.

12. Auto-mobiles, unbemanntes, steuerbares Fluggerät (20), insbesondere Drohne, insbesondere wobei das Fluggerät (20) schwebend ausrichtbar und bewegbar ist, zur Verwendung in einem Vermessungssystem (10) nach einem der Ansprüche 1 bis 6, wobei
• Steuerungsdaten zur Steuerung des Fluggeräts (20) relativ zu einem äussere Objektkoordinatensystem empfangbar sind und/oder
• die Steuerungsdaten zur Steuerung des Fluggeräts (20) durch eine Verarbeitungseinheit (28) aus empfangbaren Referenzierungsinformationen zur Bestimmung einer Flugausrichtung und einer Flugposition des Fluggeräts (20) ableitbar sind, insbesondere wobei die Flugausrichtung durch eine dem Fluggerät (20) zugeordnete Ausrichtungsbestimmungaeinheit bestimmbar ist,
**dadurch gekennzeichnet, dass**
• das Fluggerät (20) eine auf dem Triangulationsprinzip basierende optische
Abtastvorrichtung (21,21a,21b,21c) zur, insbesondere punktweisen, optischen Abtastung von Messpunkten einer Objektoberfläche (65) und zur Bestimmung von inneren Messpunktkoordinaten in einem inneren Abtastkoordinatensystem trägt,
• die Verarbeitungseinheit (28) derart konfiguriert ist, dass die inneren Messpunktkoordinaten im äusseren Objektkoordinatensystem referenzierbar sind, und
• eine Bestimmung von 3D-Koordinaten der Messpunkte im äusseren Objektkoordinatensystem aus den inneren Messpunktkoordinaten und aus der Referenzierung der inneren Messpunktkoordinaten durchführbar ist, sodass die inneren Messpunktkoordinaten als 3D-Koordinaten in dem äusseren Objektkoordinatensystem, insbesondere als Punktwolke, vorliegen, und
• die Steuerungsdaten zur Steuerung des Fluggeräts (20) derart konfiguriert sind, dass das Fluggerät (20)
□ unter Berücksichtigung von mittels der Abtastvorrichtung (21,21a,21b,21c) jeweils aktuell bestimmten inneren Messpunktkoordinaten und/oder
□ unter Berücksichtigung von einer durch ein digitales Modell vordefinierten Objektoberfläche entlang einer durch das digitale Modell definierten Flugroute (81,82)
automatisch gesteuert relativ zur Objektoberfläche (65) unter Einhaltung eines vordefinierten Messabstandsbereichs, insbesondere Messabstands, bewegt wird.

13. Fluggerät (20) nach Anspruch 12 zur Verwendung in einem Vermessungssystem (10) nach einem der Ansprüche 1 bis 6
**dadurch gekennzeichnet, dass**
die steuerungsdaten derart konfiguriert sind, dass das Fluggerät (20) in Abhängigkeit der, insbesondere fortlaufend bestimmbaren, Vermessposition und Vermessausrichtung und/oder eines mittels der Abtastvorrichtung (21,21a,21b,21c) bestimmbaren Vermessabstands zur Objektoberfläche (65) automatisch gesteuert relativ zur Objektoberfläche (65) bewegbar und ausrichtbar ist,
und/oder
die Abtastvorrichtung (21,21a,21b,21c) eine optische Scannvorrichtung, wobei bei der Bewegung des Fluggeräts (20) Scannstreifen erzeugbar sind, und/oder ein Bild-Sequenzen verwendendes Messsystem zur Bestimmung der Messpunktkoordinaten aufweist,
insbesondere wobei die
Abtastvorrichtung (21,21a,21b,21c) einen Linienscanner, einen Streifenprojektionsscanner und/oder eine Kamera aufweist,
und/oder
die Ausrichtungsbestimmungseinheit eine Sensoreinheit (27) aufweist, insbesondere einen Neigungssensor, ein Magnetometer, einen Beschleunigungssensor, einen Drehratensensor und/oder ein Geschwindigkeitssensor,
und/oder das Fluggerät (20) einen Abstandsmesssensor, insbesondere Radar, zur Abstandsmessung zu einem Gegenstand aufweist,
und/oder
das Fluggerät (20) zur definierten Ausrichtung, insbesondere selbsttätig parallelen Ausrichtung zur Lotrichtung, der Abtastvorrichtung (21,21a,21b,21c) eine kardanische Aufhängung und/oder Ausrichtmittel zur Ausrichtung der Abtastvorrichtung (21,21a,21b,21c) aufweist, insbesondere wobei die
Abtastvorrichtung (21,21a,21b,21c) in zwei, insbesondere in drei, Achsen schwenkbar ist,
und/oder
das Fluggerät (20) eine Eingabeeinheit, insbesondere Tastatur, berührungssensitives Display, Datenschnittstelle, zur Eingabe von Information und/oder Steuerbefehlen, insbesondere von Objektdaten,
und/oder eine Ausgabeeinheit, insbesondere Display, zur Ausgabe von Information, insbesondere der erzeugten Punktwolke,
und/oder das Fluggerät (20) eine Fernbedienung zur Steuerung des Fluggeräts (20), insbesondere wobei die Fernbedienung ein Display zur Darstellung von Information und/oder der erzeugten Punktwolke aufweist, aufweist.

14. Verwendung eines unbemannten, steuerbaren, auto-mobilen Fluggeräts (20) als Träger einer auf dem Triangulationsprinzip basierenden optischen Abtastvorrichtung (21,21a,21b,21c) mit einem Vermessungssystem (10) nach einem der Ansprüche 1 bis 6.

15. Computerprogrammprodukt, das auf einem maschinenlesbaren Träger gespeichert ist, oder Computer-Daten-Signal, verkörpert durch eine elektromagnetische Welle, mit Programmcode zur Durchführung des Verfahrens nach einem der Ansprüche 7 bis 11, insbesondere wenn das Programm in einer elektronischen Datenverarbeitungseinheit ausgeführt wird.

## Claims

1. A measuring system (10) for determining 3D coordinates, in particular of a plurality of 3D coordinates, of measurement points of an object surface (65), in particular of an industrial product, in an outer object coordinate system with
• an optical scanning device (21,21a,21b,21c) based on the triangulation principle for, especially point by point, optical measurement of the measurement points of the object surface (65) and for determining inner measurement point coordinates in an inner scanning coordinate system,
• a referencing arrangement (30,30a,30b,70a,70b) for generating referencing information for referencing the inner measurement point coordinates in the outer object coordinate system and
• an evaluation unit (34) for determining the 3D coordinates of the measurement points in the outer object coordinate system depending on the inner measurement point coordinates and the referencing information, so that the inner measurement point coordinates are present as 3D coordinates in the outer object coordinate system, in particular as a scatter plot,
**characterized by**
• an unmanned, controllable, automotive air vehicle (20) carrying the scanning device (21,21a,21b,21c), in particular wherein the air vehicle (20) is designed such that the air vehicle (20) can be oriented and moved while hovering, and
• a control unit (40) configured such that the air vehicle (20) is moved relative to the object surface (65) under automatic control while maintaining a predefined range of measuring distances, especially a measuring distance
• taking into account respective current inner measurement point coordinates determined using the scanning device (21,21a,21b,21c) and/or
• taking into account an object surface predefined by a digital model along a flight path (81,82) defined by the digital model.

2. The measuring system (10) as claimed in claim 1,
**characterized in that**
the control unit (40) is configured such that the air vehicle (20) can be moved and oriented while being automatically controlled relative to the object surface (65) depending on a measuring position and measuring orientation of the scanning device (21,21a,21b,21c) that can be determined, especially continuously determined, using the referencing arrangement (30,30a,30b,70a,70b) and/or on a measuring distance to the object surface (65) that can be determined using the scanning device (21,21a,21b,21c)
and/or
a position and/or a target profile of the object surface (65) can be predefined, in particular predetermined by the digital model, in particular a CAD model, in particular wherein based on the predefined object surface (65) respective target surface coordinates can be compared with the respective 3D coordinates and in particular wherein the referencing arrangement (30,30a,30b,70a,70b) can be referenced to the object surface (65) by referencing predefined reference points (61), and/or the scanning device (21,21a,21b,21c) comprises an optical scanning apparatus, wherein scanning strips can be generated during the movement of the air vehicle (20), and/or a measuring system using image sequences for determining the measurement point coordinates, in particular wherein the scanner (21,21a,21b,21c) comprises a line scanner, a strip projection scanner and/or a camera.

3. The measuring system (10) as claimed in claim 2,
**characterized in that**
the flight path (81,82) can be determined, in particular automatically, depending on the surface position and the target surface profile, in particular wherein the flight path (81,82) and/or a flight speed can be optimized with regard to a scanning travel, a scanning time, a scanning accuracy, a stability of motion of the air vehicle (20), determination of the position and orientation of the air vehicle (20) and/or collision avoidance, in particular wherein a distance to an object, in particular to an obstruction, can be determined using a distance measurement sensor, in particular wherein the scanning strips can be at least partly overlapped depending on the flight path (81,82), whereby
• the scanning accuracy, the scanning travel and the scanning time can be adjusted and/or
• the movement and orientation of the air vehicle (20) and/or the scanning device (21,21a,21b,21c) can be determined and/or adjusted using an analysis of an overlap area of the scanning strips, in particular by image processing.

4. The measuring system (10) as claimed in any one of claims 2 or 3,
**characterized in that**
the referencing arrangement (30,30a,30b,70a,70b) comprises
• a position determining arrangement, which is designed such that the outer measuring position of the scanning device (21,21a,21b,21c) can be determined in relation to the object coordinate system, and/or
• an orientation determination arrangement, which is designed such that the measuring orientation of the scanning device (21,21a,21b,21c) can be determined in relation to the object coordinate system,
in particular wherein the measuring position and the measuring orientation of the scanning device (21,21a,21b,21c) can be determined using a known positional relationship and orientation relationship of the air vehicle (20) to the scanning device (21,21a,21b,21c), in particular wherein an air vehicle position and an air vehicle orientation can be determined by the referencing arrangement (30,30a,30b,70a,70b).

5. The measuring system (10) as claimed in any one of claims 1 to 4,
**characterized in that**
• the scanning device (21,21a,21b,21c) and/or the air vehicle (20) comprise(s) a reflector (23),
• the referencing arrangement (30,30a,30b,70a, 70b) comprises a geodetic measuring device, in particular a total station or laser tracker (30,30a,30b), with at least
• a radiation source for generating an optical measurement beam (33,33a,33b) for distance measurement,
• a base defining a vertical axis,
• a beam deflection unit (32,32a,32c) for emitting the measurement beam (33,33a,33b) and for receiving at least part of the measurement beam reflected at the reflector (23), wherein for orientation of an optical target axis the beam deflection unit (32,32a,32c) can be pivoted by a motor relative to the base about the vertical axis and an inclination axis essentially orthogonal to the vertical axis,
• angle measuring functionality for high precision recording of the orientation of the target axis, and
• evaluation means for data storage and controlling the orientation of the beam deflection unit (32,32a,32b), and
• the measuring beam (33,33a,33b) can be oriented to the reflector (23), in particular continuously, so that the measuring position of the scanning device (21,21a,21b,21c) and/or an air vehicle position can be determined, in particular wherein
• a signal (35) that can be transmitted to the scanning device (21,21a,21b,21c) and/or to the air vehicle (20) contains
• position information, wherein the position information can be converted into control data for controlling the air vehicle (20) in a first processing unit associated with the air vehicle (20), or
• the control data for controlling the air vehicle (20), wherein the control data can be determined from the position information using a second processing unit associated with the referencing arrangement (30,30a,30b,70a,70b), and/or
• the referencing arrangement (30,30a,30b,70a, 70b) comprises at least one GNSS satellite, in particular represented by GPS, GLONASS or Galileo, wherein the GNSS satellite provides GNSS signals, and
• the scanning device (21,21a,21b,21c) and/or the air vehicle comprises a receiver unit (26), in particular a GNSS antenna, so that the GNSS signals can be received and the measuring position of the scanning device (21,21a,21b,21c) can be determined from the received GNSS signals,
in particular wherein
• the referencing arrangement (30,30a,30b,70a, 70b) comprises a pseudo satellite module (70a,70b) for transmitting positioning signals (71) and
• the receiver unit (26) of the scanning device (21,21a,21b,21c) and/or of the air vehicle (20) is designed such that the positioning signals (71) can be received and the measuring position and/or the measuring orientation of the scanner (21,21a,21b,21c) can be determined from the received positioning signals (71).

6. The measuring system (10) as claimed in any one of claims 1 to 5
**characterized in that**
the referencing arrangement (30,30a,30b,70a,70b)
• comprises a sensor unit (27) associated with the scanning device (21,21a,21b,21c) and/or the air vehicle (20) for determining the measuring orientation and/or the measuring position of the scanner (21,21a,21b,21c), in particular an inclination sensor, a magnetometer, an acceleration sensor, a turn rate sensor and/or a speed sensor, and/or
• the scanning device (21,21a,21b,21c) and/or the air vehicle (20) comprises a marker (24) giving the measuring orientation, in particular a defined pattern, a pseudo random pattern, a barcode and/or a light emitting diode, and
• the referencing arrangement (30,30a,30b,70a,70b) comprises a recording unit (31,31a,31b), in particular a camera, for recording the marker (24) and for determining the measuring orientation of the scanning device (21,21a,21b,21c) from the position and arrangement of the marker (24),
and/or
the referencing arrangement (30,30a,30b,70a,70b) comprises a distance image acquisition unit, in particular a RIM camera, for recording an image of the air vehicle (20), wherein a contour and/or image point-dependent distance data to the air vehicle (20) can be derived from the image and the measuring orientation and/or the measuring position can be determined therefrom
and/or
the air vehicle (20) comprises an environment recording unit, in particular a camera, for recording a position marker disposed in a measurement environment, in particular a defined pattern or a pseudo-random pattern, wherein the determination of the measuring orientation and/or the measuring position can be carried out using a position and orientation of a marker recorded on an image.

7. A method for determining 3D coordinates,
in particular a plurality of 3D coordinates, of measurement points of an object surface (65), in particular of an industrial product, in an outer object coordinate system with
• especially point by point, spatially displaceable, local optical scanning of the measurement points of the object surface (65) based on the triangulation principle and determining local measurement point coordinates in an inner scanning coordinate system,
• generating referencing information, in particular an outer measuring position and measuring orientation, for referencing the local measurement point coordinates in the outer object coordinate system and
• determining the 3D coordinates of the measurement points in the outer object coordinate system depending on the local measurement point coordinates and the referencing information, so that the local measurement point coordinates are present as 3D coordinates in the outer object coordinate system, in particular as a scatter plot,
**characterized in that**
• displacement of the local scanning takes place by means of an unmanned, controllable, automotive air vehicle (20), in particular wherein the air vehicle (20) is oriented and moved while hovering, and
• the air vehicle (20) is moved while being automatically controlled relative to the object surface (65) while maintaining a predefined range of measuring distances, in particular a measuring distance
• taking into account respective current determined inner measurement point coordinates and/or
• taking into account an object surface predefined by a digital model along a flight path (81,82) defined by the digital model.

8. The method for determining 3D coordinates as claimed in claim 7
**characterized in that**
the air vehicle (20) is moved and oriented depending on the, in particular continuously determined, outer measuring position and outer measuring orientation and on a measuring distance to the object surface (65) while being automatically controlled relative to the object surface (65), and/or
a position and/or a target profile of the object surface (65) is/are predefined, in particular specified by a digital model, in particular a CAD model, in particular wherein based on the predefined object surface (65) respective target surface coordinates are compared with the respective 3D coordinates and in particular wherein the referencing arrangement (30,30a,30b,70a,70b) is referenced to the object surface (65) by referencing predefined reference points (61),
and/or
the scanning of the measurement points takes place by optical scanning, in particular with a scanning device (21,21a,21b,21c), wherein scanning strips are generated, and/or optically with a measuring system using image sequences for determining the measurement point coordinates.

9. The method for determining 3D coordinates as claimed in claim 8
**characterized in that**
the flight path (81,82) is determined, in particular automatically, depending on the surface positions and the surface profile, in particular wherein the flight path (81,82) and/or a flight speed is/are optimized with regard to a scanning travel, a scanning time, a scanning accuracy, a stability of motion of the air vehicle (20), position and orientation determination of the air vehicle (20) and/or collision avoidance, in particular wherein a distance to an object, in particular to an obstruction is determined,
in particular wherein the scanning strips are at least partly overlapped depending on the flight path (81,82), whereby
• the scanning accuracy, the scanning travel and the scanning time are adjusted and/or,
• the movement and orientation of the air vehicle (20) and/or the measuring orientation are determined and/or adjusted using an analysis of an overlap area of the scanning strips, in particular by image processing.

10. The method for determining 3D coordinates as claimed in any one of claims 8 or 9
**characterized in that**
within the framework of the method positioning signals (71), in particular signals provided by pseudo satellites (70a,70b) and/or GNSS signals, are received, in particular wherein the GNSS signals are represented by GPS, GLONASS or Galileo signals, and the outer measuring position is determined from the received positioning signals (71), and/or
determining the outer measuring position takes place using a measurement beam (33,33a,33b), in particular reflected at the air vehicle (20), and/or
determining the measuring orientation takes place in the pitch, roll and yaw directions, in particular wherein the determination takes place using an inner sensor unit (27) associated with the air vehicle (20), in particular using an inclination sensor, a magnetometer, an acceleration sensor, a turn rate sensor and/or a speed sensor and/or
determining the measuring orientation using a combination of
• a marker (24) associated with the air vehicle (20), which gives the measuring orientation, in particular a defined pattern, a pseudo-random pattern, a barcode and/or a light emitting diode, and
• recording the marker (24) for determining the measuring orientation from a position and arrangement of the marker (24) takes place, especially using a camera.

11. The method for determining 3D coordinates as claimed in any one of claims 8 to 10
**characterized in that**
the measuring orientation is oriented in parallel, especially automatically, with the vertical direction and/or is defined relative to the air vehicle orientation, in particular by a gimbal suspension and/or by an orientation means for defined orientation of the measuring orientation, in particular wherein pivoting takes place in two, especially in three, axes and/or
information and/or control commands, in particular object data, are input into the air vehicle (20), and/or information, in particular the generated scatter plot, is output, in particular on a display.

12. An automotive, unmanned, controllable air vehicle (20), in particular a drone, in particular wherein the air vehicle (20) can be oriented and moved while hovering, for use in a measuring system (10) as claimed in any one of claims 1 to 6, wherein
• control data for controlling the air vehicle (20) relative to an outer object coordinate system can be received and/or
• the control data for controlling the air vehicle (20) can be derived by a processing unit (28) from receivable referencing information for determining a flying orientation and a flying position of the air vehicle (20), in particular wherein the flying orientation can be determined by an orientation determination unit associated with the air vehicle (20),
**characterized in that**
• the air vehicle (20) carries an optical scanning device (21,21a,21b,21c) based on the triangulation principle for, in particular point by point, optical scanning of measurement points of an object surface (65) and for determining inner measurement point coordinates in an inner scanning coordinate system,
• the processing unit (28) is configured such that the inner measurement point coordinates can be referenced in the outer object coordinate system, and
• determining 3D coordinates of the measurement points in the outer object coordinate system can be carried out from the inner measurement point coordinates and from referencing of the inner measurement point coordinates, so that the inner measurement point coordinates are present as 3D coordinates in the outer object coordinate system, in particular as a scatter plot, and
• the control data for controlling the air vehicle (20) are configured such that the air vehicle (20) is moved while being automatically controlled relative to the object surface (65) while maintaining a predefined range of measuring distances, in particular a measuring distance
• taking into account respective current inner measurement point coordinates determined using the scanning device (21,21a,21b,21c) and/or
• taking into account an object surface predefined by a digital model along a flight path (81,82) defined by the digital model.

13. The air vehicle (20) as claimed in claim 12 for use in a measuring system (10) as claimed in any one of claims 1 to 6
**characterized in that**
the control data are configured such that the air vehicle (20) can be moved and oriented depending on the, in particular continuously determinable, measuring position and measuring orientation and/or a measuring distance to the object surface (65) that can be determined using the scanning device (21,21a,21b,21c), while being automatically controlled relative to the object surface (65),
and/or
the scanning device (21,21a,21b,21c) comprises an optical scanning apparatus, wherein scanning strips can be generated during movement of the air vehicle (20), and/or
a measuring system using an image sequence for determining the measurement point coordinates, in particular wherein the scanning device (21,21a,21b,21c) comprises a line scanner, a strip projection scanner and/or a camera, and/or
the orientation determination unit comprises a sensor unit (27), in particular an inclination sensor, a magnetometer, an acceleration sensor, a turn rate sensor and/or a speed sensor, and/or the air vehicle (20) comprises a distance measurement sensor, in particular radar, for distance measurement to an object,
and/or
the air vehicle (20) for defined orientation of the scanning device (21,21a,21b,21c), in particular automatic parallel orientation to the vertical direction, comprises a gimbal suspension and/or orientation means for orientation of the scanning device (21,21a,21b,21c), in particular wherein the scanning device (21,21a,21b,21c) can be pivoted in two, in particular in three, axes, and/or
the air vehicle (20) comprises an input unit, in particular a keyboard, a touch-sensitive display, a data interface, for input of information and/or control commands, in particular of object data, and/or an output unit, in particular a display, for the output of information, in particular the generated scatter plot,
and/or the air vehicle (20) comprises a remote controller for controlling the air vehicle (20), in particular wherein the remote controller comprises a display for displaying information and/or the generated scatter plot.

14. The use of an unmanned, controllable, automotive air vehicle (20) as carrier of an optical scanning device (21,21a,21b,21c) based on the triangulation principle with a measuring system (10) as claimed in any one of claims 1 to 6.

15. A computer program product, which is stored on a machine-readable medium, or a computer data signal, embodied by an electromagnetic wave, with program code for carrying out the method as claimed in any one of claims 7 to 11, in particular if the program is implemented in an electronic data processing unit.

## Revendications

1. Système de mesure (10) pour déterminer des coordonnées 3D, en particulier une multitude de coordonnées 3D, de points de mesure d'une surface d'objet (65), en particulier d'un produit industriel, dans un système extérieur de coordonnées d'objet avec
• un dispositif de balayage optique (21, 21a, 21b, 21c) basé sur le principe de triangulation pour la mesure optique, en particulier point par point, des points de mesure de la surface de l'objet (65) et pour déterminer des coordonnées intérieures de points de mesure dans un système intérieur de coordonnées de balayage,
• un arrangement de référencement (30, 30a, 30b, 70a, 70b) pour produire des informations de référencement pour le référencement des coordonnées intérieures des points de mesure dans un système extérieur de coordonnées d'objet et
• une unité d'évaluation (34) pour déterminer les coordonnées 3D des points de mesure dans le système extérieur de coordonnées d'objet en fonction des coordonnées intérieures des points de mesure et des informations de référencement si bien que les coordonnées intérieures des points de mesure existent en tant que coordonnées 3D dans le système extérieur de coordonnées d'objet, en particulier en tant que nuage de points,
**caractérisé par**
• un appareil de vol mobile automatique, sans conducteur, qui peut être commandé, qui porte le dispositif de balayage (21, 21a, 21b, 21c), en particulier l'appareil de vol (20) étant orientable et mobile en planant et
• une unité de commande (40) configurée de telle manière que l'appareil de vol (20) est déplacé
∘ en tenant compte de coordonnées intérieures actuelles des points de mesure respectivement déterminées au moyen du dispositif de balayage (21, 21 a, 21 b, 21 c) et/ou
∘ en tenant compte d'une surface d'objet prédéfinie par un modèle numérique le long d'une trajectoire de vol (81, 82) définie par le modèle numérique,
en étant commandé de manière automatique par rapport à la surface de l'objet (65) en respectant une plage de distance de mesure prédéfinie, en particulier d'une distance de mesure.

2. Système de mesure (10) selon la revendication 1, **caractérisé en ce que** l'unité de commande (40) est configurée de telle manière que l'appareil de vol (20) est mobile et orientable par rapport à la surface de l'objet (65) en étant commandée de manière automatique au moyen d'une position de mesure et d'une orientation de mesure du dispositif de balayage (21, 21a, 21b, 21c) qui peut être déterminée, en particulier qui peut être déterminée en continu au moyen de l'arrangement de référencement (30, 30a, 30b, 70a, 70b) et/ou d'une distance de mesure par rapport à la surface de l'objet (65) qui peut être déterminée au moyen du dispositif de balayage (21, 21a, 21b, 21c)
et/ou
une position et/ou une allure de consigne de la surface de l'objet (65) peut être prédéfinie, en particulier peut être prédéterminée par le modèle numérique, en particulier le modèle CAO, en particulier cependant que des coordonnées de consigne respectives de la surface peuvent être comparées sur la base de la surface de l'objet prédéfinie (65) aux coordonnées 3D respectives et en particulier cependant que l'arrangement de référencement (30, 30a, 30b, 70a, 70b) peut être référencé par un référencement de points de référence prédéfinis (61) par rapport à la surface de l'objet (65) et/ou le dispositif de balayage (21, 21a, 21b, 21c) présente un dispositif de scanner optique, cependant que des franges de scanner peuvent être produite lors du déplacement de l'appareil de vol (20) et/ou présente un système de mesure qui utilise des séquences d'image pour la détermination des coordonnées des points de mesure, en particulier cependant que le dispositif de balayage (21, 21a, 21b, 21c) présente un scanner à faisceau unique, un scanner de projection de franges et/ou une caméra.

3. Système de mesure (10) selon la revendication 2, **caractérisé en ce que** la trajectoire de vol (81, 82) peut être déterminée, en particulier automatiquement, en fonction de la position de la surface et de l'allure de consigne de la surface, en particulier cependant que la trajectoire de vol (81, 82) et/ou une vitesse de vol, peuvent être optimisées pour ce qui est d'un trajet de scanner, d'un temps de scanner, d'une exactitude de scanner, d'une stabilité de déplacement de l'appareil de vol (20), d'une détermination de la position et de l'orientation de l'appareil de vol (20) et/ou d'un évitement de collision, en particulier cependant qu'une distance par rapport à un objet, en particulier par rapport à un obstacle, peut être déterminée au moyen d'un détecteur de mesure de distance, en particulier cependant que les franges de scanner peuvent se chevaucher au moins partiellement en fonction de la trajectoire de vol (81, 82) si bien que
• l'exactitude de scanner, le trajet de scanner et le temps de scanner sont réglables et/ou
• le déplacement et l'orientation de l'appareil de vol (20) et/ou du dispositif de balayage (21, 21a, 21b, 21c) peuvent être déterminés et/ou ajustés au moyen d'une analyse d'une zone de chevauchement des franges de scanner, en particulier par traitement d'images.

4. Système de mesure (10) selon l'une des revendications 2 ou 3, **caractérisé en ce que** l'arrangement de référencement (30, 30a, 30b, 70a, 70b) présente
• un arrangement de détermination de position qui est configuré tel que la position extérieure de mesure du dispositif de balayage (21, 21a, 21b, 21c) peut être déterminée par rapport au système de coordonnées de l'objet et/ou
• un arrangement de détermination d'orientation qui est configuré tel que l'orientation de mesure du dispositif de balayage (21, 21a, 21b, 21c) peut être déterminée par rapport au système de coordonnées de l'objet,
en particulier cependant que la position de mesure et l'orientation de mesure du dispositif de balayage (21, 21a, 21b, 21c) peut être déterminée par un rapport de position connu et un rapport d'orientation connu de l'appareil de vol (20) par rapport au dispositif de balayage (21, 21a, 21b, 21c), en particulier cependant qu'une position de l'appareil de vol et une orientation de l'appareil de vol peuvent être déterminées par l'arrangement de référencement (30, 30a, 30b, 70a, 70b).

5. Système de mesure (10) selon l'une des revendications 1 à 4, **caractérisé en ce que**
• le dispositif de balayage (21, 21a, 21b, 21c) et/ou l'appareil de vol (20) présente un réflecteur (23),
• l'arrangement de référencement (30, 30a, 30b, 70a, 70b) présente un appareil de mesure géodésique, en particulier une station totale ou un système de poursuite laser (30, 30a, 30b) avec au moins
∘ une source de faisceau pour produire un faisceau de mesure optique (33, 33a, 33b) pour la mesure de la distance,
∘ une base qui définit un axe vertical,
∘ une unité de guidage de faisceau (32, 32a, 32c) pour l'émission du faisceau de mesure (33, 33a, 33b) et pour la réception d'au moins une partie du faisceau de mesure réfléchi sur le réflecteur (23), cependant que l'unité de guidage de faisceau (32, 32a, 32c) est pivotante de manière motorisée par rapport à la base pour l'orientation d'une ligne de visée optique autour de l'axe vertical et d'un axe d'inclinaison qui est substantiellement orthogonal par rapport à l'axe vertical,
∘ une fonctionnalité de mesure d'angle pour la détection extrêmement précise de l'orientation de la ligne de visée et
∘ des moyens d'exploitation pour la mémorisation de données et la commande de l'orientation de l'unité de guidage de faisceau (32, 32a, 32b)
et
• que le faisceau de mesure (33, 33a, 33b) peut être orienté, en particulier en continu, sur le réflecteur (23) si bien que la position de mesure du dispositif de balayage (21, 21a, 21b, 21c) et/ou une position de l'appareil de vol peut être déterminée, en particulier cependant
• qu'un signal (35) qui peut être transmis au dispositif de balayage (21, 21a, 21b, 21c) et/ou à l'appareil de vol (20) présente
∘ une information de position, cependant que l'information de position peut être convertie dans une première unité de traitement associée à l'appareil de vol (20) en données de commande pour la commande de l'appareil de vol (20) ou
∘ les données de commande pour la commande de l'appareil de vol (20), cependant que les données de commande peuvent être déterminées à partir de l'information de position au moyen d'une seconde unité de traitement associée à l'arrangement de référencement (30, 30a, 30b, 70a, 70b)
et/ou
• l'arrangement de référencement (30, 30a, 30b, 70a, 70b) présente un satellite GNSS, en particulier représenté par GPS, GLONASS ou Galileo, cependant que le satellite GNSS met à disposition des signaux GNSS et
• le dispositif de balayage (21, 21a, 21b, 21c) et/ou l'appareil de vol présente une unité de réception (26), en particulier une antenne GNSS, si bien que les signaux GNSS peuvent être reçus et la position de mesure peut être déterminée à partir des signaux GNSS reçus, cependant que
• l'arrangement de référencement (30, 30a, 30b, 70a, 70b) présente un module de pseudo-satellite (70a, 70b) pour l'émission de signaux de positionnement (71) et
• l'unité de réception (26) du dispositif de balayage (21, 21a, 21b, 21c) et/ou de l'appareil de vol (20) est configurée telle que les signaux de positionnement (71) peuvent être reçus et que la position de mesure et/ou l'orientation de mesure du dispositif de balayage (21, 21a, 21b, 21c) peuvent être déterminées à partir des signaux de positionnement reçus (71).

6. Système de mesure selon l'une des revendications 1 à 5, **caractérisé en ce que** l'arrangement de référencement (30, 30a, 30b, 70a, 70b) présente
• une unité de détecteur (27) associée au dispositif de balayage (21, 21a, 21b, 21c) et/ou à l'appareil de vol (20) pour déterminer l'orientation de mesure et/ou la position de mesure du dispositif de balayage (21, 21a, 21b, 21c), en particulier un détecteur d'inclinaison, un magnétomètre, un détecteur d'accélération, un détecteur de vitesse de rotation et/ou un détecteur de vitesse
et/ou
• le dispositif de balayage (21, 21a, 21b, 21c) et/ou l'appareil de vol (20) présente un marquage (24) qui indique l'orientation de mesure, en particulier un motif défini, une forme pseudo-aléatoire, un code barres et/ou une diode luminescente et
• l'arrangement de référencement (30, 30a, 30b, 70a, 70b) présente une unité de détection (31, 31a, 31b), en particulier une caméra, pour la détection du marquage (24) et pour déterminer l'orientation de mesure du dispositif de balayage (21, 21a, 21b, 21c) à partir de la position et de la disposition du marquage (24)
et/ou
l'arrangement de référencement (30, 30a, 30b, 70a, 70b) présente une unité de détection d'image de distance, en particulier une caméra RIM, pour la détection d'une image de l'appareil de vol (20), cependant que des contours et/ou des données de distance par rapport à l'appareil de vol (20) qui dépendent des points de l'image peuvent être dérivées de l'image et que l'orientation de mesure et/ou la position de mesure peuvent être déterminées à partir de ceux-ci
et/ou
l'appareil de vol (20) présente une unité de détection de l'environnement, en particulier une caméra, pour la détection d'un marquage de position placé dans un environnement de mesure, en particulier d'un motif défini ou d'une forme pseudo-aléatoire, cependant que la détermination de l'orientation de mesure et/ou de la position de mesure peut être exécutée à partir d'une position et d'une orientation du marquage de position détecté sur une image.

7. Procédé pour déterminer des coordonnées 3D, en particulier une multitude de coordonnées 3D, de points de mesure d'une surface d'objet (65), en particulier d'un produit industriel, dans un système extérieur de coordonnées d'objet avec
• un balayage optique des points de mesure de la surface de l'objet (65) basé sur le principe de triangulation, local, en particulier point par point, pouvant être déplacé spatialement et détermination de coordonnées locales de points de mesure dans un système intérieur de coordonnées de balayage,
• une production d'informations de référencement, en particulier d'une position extérieure de mesure et d'une orientation de mesure pour le référencement des coordonnées locales des points de mesure dans le système extérieur de coordonnées d'objet et
• une détermination des coordonnées 3D des points de mesure dans le système extérieur de coordonnées d'objet en fonction des coordonnées locales des points de mesure et des informations de référencement si bien que les coordonnées locales des points de mesure sont présentes comme coordonnées 3D dans le système extérieur de coordonnées d'objet, en particulier comme nuage de points,
**caractérisé en ce**
• **qu'**un déplacement du balayage local est effectué par un appareil de vol mobile, automatique, sans conducteur, pouvant être commandé (20), en particulier cependant que l'appareil de vol (20) est déplacé et orienté en planant et
• l'appareil de vol (20) est déplacé
∘ en tenant compte de coordonnées intérieures actuelles des points de mesure respectivement déterminées et/ou
∘ en tenant compte d'une surface d'objet prédéfinie par un modèle numérique le long d'une trajectoire de vol (81, 82) définie par le modèle numérique,
en étant commandé de manière automatique par rapport à la surface de l'objet (65) en respectant une plage de distance de mesure prédéfinie, en particulier d'une distance de mesure.

8. Procédé pour déterminer des coordonnées 3D selon la revendication 7, **caractérisé en ce que** l'appareil de vol (20) est déplacé et orienté par rapport à la surface de l'objet (65) en étant commandé automatiquement en fonction de la position de mesure extérieure, en particulier déterminée en continu, et de l'orientation de mesure extérieure et d'une distance de mesure par rapport à la surface de l'objet (65)
et/ou
qu'une position et/ou une allure de consigne de la surface de l'objet (65) est prédéfinie, est en particulier prédéterminée par un modèle numérique, en particulier par un modèle CAO, en particulier cependant que des coordonnées de consigne respectives de la surface sont comparées à des coordonnées 3D respectives sur la base de la surface de l'objet prédéfinie (65) et en particulier cependant que l'arrangement de référencement (30, 30a, 30b, 70a, 70b) est référencé par rapport à la surface de l'objet (65) par un référencement de points de référence prédéfinis (61)
et/ou
le balayage des points de mesure est effectué par un scanning optique, en particulier avec un dispositif de scanner (21, 21a, 21 b, 21c), cependant que des franges de scanner sont produites et/ou optiquement avec un système de mesure qui utilise des séquences d'image pour déterminer les coordonnées de points de mesure.

9. Procédé pour déterminer des coordonnées 3D selon la revendication 8, **caractérisé en ce que** la trajectoire de vol (81, 82) est déterminée, en particulier automatiquement, en fonction de la position de la surface et de l'allure de la surface, en particulier cependant que la trajectoire de vol (81, 82) et/ou une vitesse de vol est optimisée pour ce qui est d'un trajet de scanner, d'un temps de scanner, d'une exactitude de scanner, d'une stabilité de déplacement de l'appareil de vol (20), d'une détermination de la position et de l'orientation de l'appareil de vol (20) et/ou d'un évitement de collision, en particulier cependant qu'une distance par rapport à un objet, en particulier par rapport à un obstacle, peut être déterminée, en particulier cependant que les franges de scanner peuvent se chevaucher au moins partiellement en fonction de la trajectoire de vol (81, 82) si bien que
• l'exactitude de scanner, le trajet de scanner et le temps de scanner est réglable et/ou
• le déplacement et l'orientation de l'appareil de vol (20) et/ou du dispositif de mesure peuvent être déterminés et/ou ajustés au moyen d'une analyse d'une zone de chevauchement des franges de scanner, en particulier par traitement d'images.

10. Procédé pour déterminer des coordonnées 3D selon l'une des revendications 8 ou 9, **caractérisé en ce que**, dans le cadre du procédé, des signaux de positionnement (71), en particulier des signaux mis à disposition par des pseudo-satellites (70a, 70b) et/ou des signaux GNSS sont reçus, en particulier cependant que les signaux GNSS sont représentés par des signaux GPS, GLONASS ou Galileo et que la position extérieure de mesure est déterminée à partir des signaux de positionnement reçus (71)
et/ou
la détermination de position extérieure de mesure est déterminée au moyen d'un faisceau de mesure (33, 33a, 33b) réfléchi en particulier sur l'appareil de vol (20)
et/ou
la détermination de l'orientation de mesure se fait dans la direction de tangage, du roulis et de lacet, en particulier cependant que la détermination se fait au moyen d'une unité de détecteur (27) associée à l'appareil de vol (20), en particulier au moyen d'un détecteur d'inclinaison, d'un magnétomètre, d'un détecteur d'accélération, d'un détecteur de vitesse de rotation et/ou d'un détecteur de vitesse et/ou
la détermination de l'orientation de mesure se fait pas interaction
• d'un marquage (24) associé à l'appareil de vol (20), qui indique l'orientation de mesure, en particulier d'un motif défini, d'un motif pseudo-aléatoire, d'un code barres et/ou d'une diode luminescente et
• d'une détection, en particulier au moyen d'une caméra, du marquage (24) pour déterminer l'orientation de mesure à partir d'une situation et d'une disposition du marquage (24).

11. Procédé pour déterminer des coordonnées 3D selon l'une des revendications 8 à 10, **caractérisé en ce que** l'orientation de mesure est orientée parallèlement, en particulièrement automatiquement, à la verticale et/ou est définie par rapport à l'orientation de l'appareil de vol, en particulier par une suspension à Cardan et/ou par des moyens d'orientation pour l'orientation définie du dispositif de mesure, en particulier cependant qu'un pivotement se fait dans deux, en particulier dans trois axes, et/ou
des informations et/ou des instructions de commande, en particulier des données de l'objet, sont entrées dans l'appareil de vol (20) et/ou des informations, en particulier le nuage de points produit, sont sorties en particulier sur un dispositif d'affichage.

12. Appareil de vol mobile automatique, sans conducteur, pouvant être commandé (20), en particulier drone, en particulier cependant que l'appareil de vol (20) est mobile et orientable en planant, pour utilisation dans un système de mesure (10) selon l'une des revendications 1 à 6, cependant que
• des données de commande peuvent être reçues pour la commande de l'appareil de vol (20) par rapport à un système extérieur de coordonnées d'objet et/ou
• les données de commande pour la commande de l'appareil de vol (20) peuvent être dérivées par une unité de traitement (28) à partir d'informations de référencement qui peuvent être reçues pour déterminer une orientation de vol et une position de vol de l'appareil de vol (20), en particulier cependant que l'orientation de vol peut être déterminée par une unité de détermination d'orientation associée à l'appareil de vol (20),
**caractérisé en ce que**
• l'appareil de vol (20) porte un dispositif de balayage optique (21, 21a, 21 b, 21c) basé sur le principe de triangulation, pour la mesure optique, en particulier point par point, de points de mesure d'une surface d'objet (65) et pour déterminer des coordonnées intérieures de points de mesure dans un système intérieur de coordonnées de balayage,
• l'unité de traitement (28) est configurée telle que les coordonnées intérieures de points de mesure peuvent être référencées dans le système extérieur de coordonnées d'objet et
• une détermination de coordonnées 3D des points de mesure dans le système extérieur de coordonnées d'objet peut être effectuée à partir des coordonnées intérieures de points de mesure et du référencement des coordonnées intérieures de points de mesure si bien que les coordonnées intérieures de points de mesure sont présentes comme coordonnées 3D dans le système extérieur de coordonnées d'objet, en particulier dans le nuage de points, et
• les données de commande pour la commande de l'appareil de vol (20) sont configurées de telle manière que l'appareil de vol (20) se déplace
∘ en tenant compte de coordonnées intérieures des points de mesure actuelles respectivement déterminées au moyen du dispositif de balayage (21, 21a, 21b, 21c) et/ou
∘ en tenant compte d'une surface d'objet prédéfinie par un modèle numérique le long d'une trajectoire de vol (81, 82) définie par le modèle numérique,
en étant commandé de manière automatique par rapport à la surface de l'objet (65) en respectant une plage de distance de mesure prédéfinie, en particulier d'une distance de mesure.

13. Appareil de vol (20) selon la revendication 12 pour l'utilisation dans un système de mesure (10) selon l'une des revendications 1 à 6, **caractérisé en ce que** les données de commande sont configurées telles que l'appareil de vol (20) est mobile et orientable par rapport à la surface de l'objet (65) en étant commandé automatiquement en fonction de la position de mesure qui peut être déterminée en particulier en continu, et de l'orientation de mesure et/ou d'une distance de mesure par rapport à la surface de l'objet (65) qui peut être déterminée par le dispositif de balayage (21, 21 a, 21b, 21c)
et/ou
le dispositif de balayage (21, 21a, 21b, 21c) présente un dispositif de scanner optique, cependant que des franges de scanner peuvent être produites lors du déplacement de l'appareil de vol (20) et/ou un système de mesure qui utilise des séquences d'image pour la détermination des coordonnées des points de mesure, en particulier cependant que le dispositif de balayage (21, 21a, 21b, 21c) présente un scanner à faisceau unique, un scanner de projection de franges et/ou une caméra
et/ou
l'unité de détermination de l'orientation présente une unité de détecteur (27), en particulier un détecteur d'inclinaison, un magnétomètre, un détecteur d'accélération, un détecteur de vitesse de rotation et/ou un détecteur de vitesse et/ou l'appareil de vol (20) présente un détecteur de mesure de distance, en particulier un radar, pour la mesure de la distance par rapport à un objet et/ou
l'appareil de vol (20) présente, pour l'orientation définie, en particulier l'orientation automatiquement parallèle par rapport à la verticale, du dispositif de balayage (21, 21a, 21b, 21c) une suspension à Cardan et/ou des moyens d'orientation pour l'orientation du dispositif de balayage (21, 21a, 21b, 21c), en particulier le dispositif de balayage (21, 21a, 21b, 21c) étant pivotant dans deux, en particulier dans trois axes
et/ou
l'appareil de vol (20) présente une unité d'entrée, en particulier un clavier, un affichage tactile, une interface de données, pour l'entrée d'informations et/ou d'instructions de commande, en particulier de données d'objet,
et/ou une unité de sortie, en particulier un affichage, pour la sortie d'informations, en particulier du nuage de points produit
et/ou l'appareil de vol (20) présente une télécommande pour la commande de l'appareil de vol (20), en particulier cependant que la télécommande présente un affichage pour la représentation d'informations et/ou du nuage de points produit.

14. Utilisation d'un appareil de vol mobile automatique, sans conducteur, pouvant être commandé (20) comme porteur d'un dispositif de balayage optique (21, 21a, 21b, 21c) basé sur le principe de triangulation avec un système de mesure (10) selon l'une des revendications 1 à 6.

15. Produit de programme d'ordinateur qui est mémorisé sur un support lisible par machine ou signal de données d'ordinateur, incorporé par une onde électromagnétique, avec code de programme pour l'exécution du procédé selon l'une des revendications 7 à 11, en particulier lorsque le programme est réalisé sur une unité de traitement de données électronique.
